# EUROPEAN PATENT SPECIFICATION

(11) **EP 4 285 807 B1**
(45) Date of publication and mention of the grant of the patent: **27.08.2025**
(21) Application number: 22788292.5
(22) Date of filing: 24.03.2022
(51) Int. Cl.: A47L 23/20, A47L 23/18, F25B 49/02, F25B 1/00, A43D 3/14, F04D 27/00

(54) **SHOE CARE APPARATUS AND CONTROL METHOD THEREFOR**
SCHUHPFLEGEVORRICHTUNG UND STEUERUNGSVERFAHREN DAFÜR
APPAREIL D'ENTRETIEN DE CHAUSSURES ET SON PROCÉDÉ DE COMMANDE

(30) Priority: 13.04.2021 KR 20210047970
(43) Date of publication of application: 06.12.2023
(73) Proprietor: Samsung Electronics Co., Ltd., Suwon-si, Gyeonggi-do 16677 (KR)
(72) Inventor: NA, Joongwon, Suwon-si Gyeonggi-do 16677 (KR); KIM, Minsoo, Suwon-si Gyeonggi-do 16677 (KR); JEONG, Heemoon, Suwon-si Gyeonggi-do 16677 (KR); SEO, Kookjeong, Suwon-si Gyeonggi-do 16677 (KR)
(74) Representative: Gulde & Partner
(86) International application number: PCT/KR2022/004164
(87) International publication number: WO 2022/220435

(56) References cited:
- CN-A- 112 442 872
- CN-B- 101 824 738
- JP-A- 2014 161 525
- JP-A- 2021 045 353
- KR-A- 20100 067 751
- KR-A- 20160 111 685
- KR-A- 20180 057 313
- US-A- 5 777 897

## Description

### [TECHNICAL FIELD]

The present invention relates to a shoe care apparatus capable of maintaining a constant temperature of air supplied into a chamber.

### [BACKGROUND ART]

Existing dryers or clothing care devices use a venting method for heating air brought in from outside with a heater, or a closed circulation method for heating air in a chamber by continuous circulation of the air using a heat pump cycle, to supply hot air into the chamber.

The venting method, however, has problems of releasing hot and humid air with bad smell to the outside, or causing a large temperature difference in the chamber due to air brought in from outside.

In terms of the closed circulation method, because air is heated while continuously circulating inside the device, continuous heat buildup occurs, and a constant temperature of the air supplied into the chamber may not be maintained. The heat buildup continued in the chamber may cause thermal damage to objects to be dried. For example, CN 101 824 738 B discloses a control method of a clothes treating apparatus comprising an evaporator, a condenser, an air supplying device having an expansion valve and a fan. The fan to rotates by a first RPM and supplies the air by the supplying device; compares the drive pressure of a compressor to a given reference; adjusts the RPM of the fan to enable the detected drive pressure to be included in a trustable interval, when the detected drive pressure of the compressor is larger than the given reference. US 5,777,897 describes a method for controlling cooling fans for variable electrical loads and a controller monitors cooling fan output, ambient temperature and the electrical load. The controller then matches the fan speed and resulting cooling to the existing electrical load and ambient temperature.

### [TECHNICAL PROBLEM]

The present invention provides a shoe care apparatus and a method of controlling the same that may increase an operating rate of a compressor even in an environment of a high outside air temperature.

### [Technical Solution]

According to the present invention, a shoe care apparatus is provided and includes: a chamber including an air inlet and an air outlet; a first duct connected to the air outlet; an evaporator inside the first duct; a condenser inside the first duct; a second duct connecting the first duct to the air inlet; a holder in the chamber and connected to the air inlet; a first fan configured to circulate air through the first duct, the second duct, the holder, and the chamber; a compressor inside a machine room of the shoe care apparatus, the compressor separated from the chamber and the first duct and configured to discharge a refrigerant to the condenser; a second fan inside the machine room, and configured to allow air in the machine room to flow; a temperature sensor configured to measure an outside air temperature; and a processor, wherein the processor is configured to control an operation of the second fan based on the outside air temperature and an operation state of the compressor and the processor is configured to perform fuzzy control to control the operating frequency of the compressor so that a temperature of the air heated by the condenser (43) follows a target temperature..

In a further aspect, the present invention provides a method of controlling a shoe care apparatus. The shoe car apparatus includes a first duct connected to an air outlet of a chamber, a second duct connected to an air inlet of the chamber, a holder in the chamber, a first fan configured to move air into the chamber, and a compressor located inside a machine room of the shoe care apparatus that is separated from the first duct. The method includes: determining an outside air temperature using a temperature sensor; and controlling an operation of a second fan located in the machine room, based on the outside air temperature and an operation state of the compressor performing fuzzy control to control the operating frequency of the compressor so that a temperature of the air heated by the condenser follows a target temperature.

### [ADVANTAGEOUS EFFECTS]

According to the present invention, a shoe care apparatus and a method of controlling the same are provided that can increase an operating rate of a compressor even in an environment of a high outside air temperature. As the compressor's operating rate increases, an actual time for dehumidification can increase, an overall operation time of the shoe care apparatus can be reduced, and a usable temperature range of the shoe care apparatus can be extended. Accordingly, a dehumidification performance of the shoe care apparatus can be improved.

Also, the shoe care apparatus and the method of controlling the same can maintain a constant air temperature in a chamber, while circulating air in the enclosed apparatus using a heat pump cycle. Accordingly, thermal damage to objects to be dried due to heat buildup in the chamber can be prevented.

The shoe care apparatus and the method of controlling the same can also reduce a heat up time of the air in the chamber by efficiently utilizing a maximum frequency of the compressor without damaging a control circuit due to excessive current.

The shoe care apparatus and the method of controlling the same can also maintain a comfortable environment around the shoe care apparatus by not releasing contaminated air from drying and deodorizing process to the outside.

### [DESCRIPTION OF DRAWINGS]

FIG. 1 illustrates an exterior of a shoe care apparatus according to an embodiment.
FIG. 2 illustrates an interior of a shoe care apparatus according to an embodiment.
FIG. 3 is a cross-sectional view of a shoe care apparatus viewed from a front of the shoe care apparatus according to an embodiment.
FIG. 4 is a perspective view of a holder installed in a chamber viewed from above.
FIG. 5 is a perspective view of a holder installed in a chamber viewed from below.
FIG. 6 illustrates an installation rail installed in a chamber.
FIG. 7 is a schematic diagram illustrating a flow of air and refrigerant in a shoe care apparatus according to an embodiment.
FIG. 8 is a control block diagram of a shoe care apparatus according to an embodiment.
FIG. 9 is a flowchart schematically illustrating overall operations of a shoe care apparatus according to an embodiment.
FIG. 10 is a flowchart schematically illustrating operations of a compressor in a dry course.
FIG. 11 is a flowchart illustrating fuzzy control in a method of controlling a shoe care apparatus according to an embodiment.
FIG. 12 illustrates a fuzzy table.
FIG. 13 is a graph illustrating a result of fuzzy control.
FIG. 14 is a graph illustrating a limit of fuzzy control.
FIG. 15 is a flowchart illustrating compressor switching control in a method of controlling a shoe care apparatus according to an embodiment.
FIG. 16 is a flowchart illustrating another embodiment of compressor switching control in a method of controlling a shoe care apparatus according to an embodiment.
FIG. 17 is a graph illustrating a result of compressor switching control.
FIG. 18 is a flowchart illustrating a control method of a second fan in a method of controlling a shoe care apparatus according to an embodiment.
FIG. 19 is a graph illustrating an example where an operating rate of a compressor is increased by an operation of a second fan.
FIG. 20 is a graph illustrating another example where an operating rate of a compressor is increased by an operation of a second fan.
FIG. 21 is a flowchart illustrating compressor current control in a method of controlling a shoe care apparatus according to an embodiment.
FIG. 22 is a graph illustrating an example of exceeding a limit current when a compressor current control is not applied during heat up.
FIG. 23 is a graph illustrating an example of a long heat up time when a compressor current control is not applied during heat up.
FIG. 24 illustrates a current control table.
FIG. 25 is a graph illustrating a result of compressor current control.
FIG. 26 is a table illustrating embodiments where an operation frequency of a compressor is controlled based on an outside air temperature and a target temperature.

### [MODES OF THE DISCLOSURE]

Like reference numerals throughout the specification denote like elements. Also, embodiments of the present invention may include additional and/or alternative elements that are not explicitly described in the disclosure, and descriptions of elements well-known in the art to which the disclosure pertains and/or repeated descriptions may be omitted. The terms such as "~part", "~member", "~module", "~block", and the like may refer to at least one process processed by at least one hardware or software. According to embodiments, a plurality of a "~part", "~member", "~module", "~block" may be embodied as a single element, or a single "~part", "~member", "~module", "~block" may include a plurality of elements.

It will be understood that when an element is referred to as being "connected" to another element, it can be directly or indirectly connected to the other element, wherein the indirect connection includes "connection" via a wireless communication network or electrically through electrical wiring.

The terminology used herein is for the purpose of describing particular example embodiments only and is not intended to limit the disclosure. It is to be understood that the singular forms include plural forms as well, unless the context clearly dictates otherwise. It will be further understood that the terms "include", "comprise" and/or "have" when used in this specification, specify the presence of stated features, integers, steps, operations, elements, and/or components, but do not preclude the presence or addition of one or more other features, integers, steps, operations, elements, components, and/or groups thereof.

The terms including ordinal numbers like "first" and "second" may be used to explain various components, but the components are not limited by the terms. The terms are only for the purpose of distinguishing a component from another. As used herein, the term "and/or" includes any and all combinations of one or more of the associated listed items.

The terms "forward (or front)", "rearward (or behind)", "left", and "right" as used herein are defined with respect to the drawings, but the terms may not restrict the shape and position of the respective components.

Hereinafter, non-limiting example embodiments of the present invention will be described in detail.

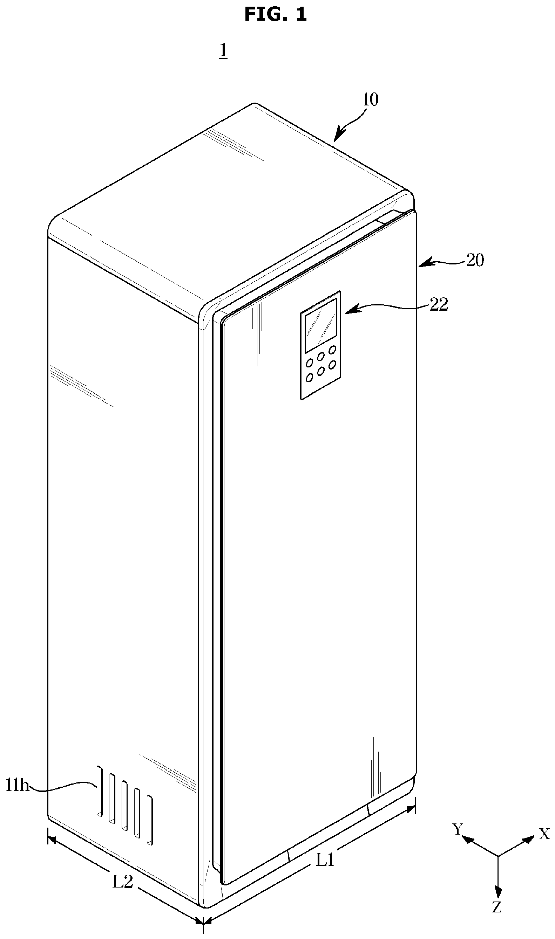

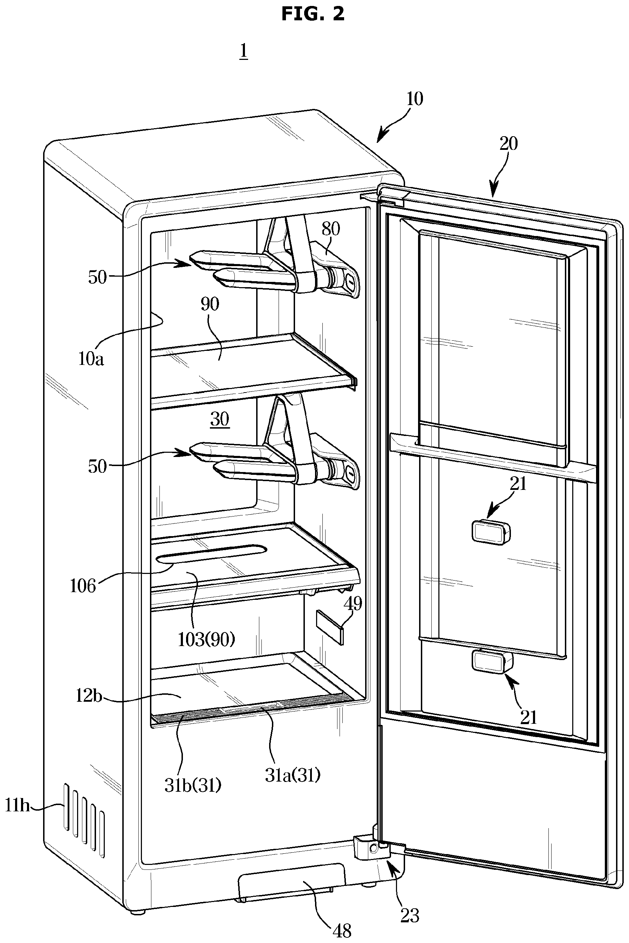

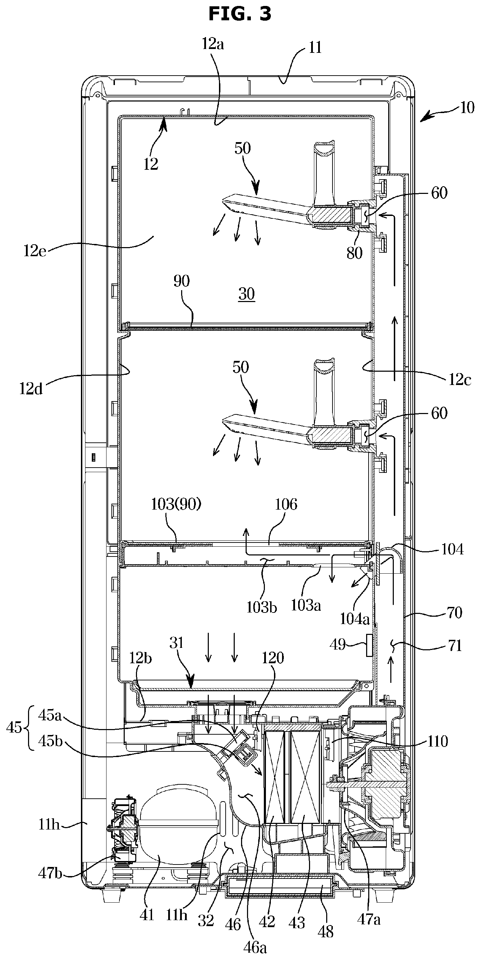

FIG. 1 illustrates an exterior of a shoe care apparatus according to an embodiment. FIG. 2 illustrates an interior of a shoe care apparatus according to an embodiment. FIG. 3 is a cross-sectional view of a shoe care apparatus viewed from a front of the shoe care apparatus according to an embodiment.

Referring to FIG. 1, FIG. 2, and FIG. 3, a shoe care apparatus 1 may include a main body 10 forming an exterior appearance, and a door 20 rotatably coupled to the main body 10.

The main body 10 may be provided in a rectangular shape with an open front side. An opening 10a may be formed on the open front side of the main body 10. The door 20 may be rotatably coupled to the main body 10 to open and close the open front side of the main body 10. The door 20 may be coupled to the main body 10 by a hinge 23.

A direction in which the door 20 of the shoe care apparatus 1 is installed may be referred to as a front of the shoe care apparatus 1. An outer surface of the door 20 may be referred to as the front of the shoe care apparatus 1. Based on the above, rear, left, right, upper and lower sides of the shoe care apparatus 1 may be defined.

The main body 10 may be formed such that a front length extending in a first direction X is different from a side length extending in a second direction Y. That is, the front surface of the main body 10 may be formed in length L1 longer than a length L2 of the side surface of the main body 10. Such a configuration enables the shoe care apparatus 1 to be easily installed even in a narrow entrance hall. The length of the front surface of the main body 10 may be defined as the first length L1 and the length of the side surface of the main body 10 may be defined as the second length L2.

The door 20 may include a control panel 22 arranged on a front or top surface of the door 20. The control panel 22 may receive various commands from a user. In addition, the control panel 22 may display various information relating to an operation of the shoe care apparatus 1. For example, the user may use the control panel 22 to select a type of shoes to be cared for, and to set a suitable care process for the shoes.

The control panel 22 may include a display for displaying information about operations of the shoe care apparatus 1. In addition, the control panel 22 may include at least one of a button or a touch screen.

Also, an outer case 11 that is a part of the main body 10 may be provided with at least one ventilation hole 11h for ventilation between air inside a machine room 32 and outside air. Because the machine room 32 is disposed below a chamber 30 within the main body 10, the at least one ventilation hole 11h may be arranged in a lower portion of the outer case 11 of the main body 10 to correspond to a position of the machine room 32. For example, the at least one ventilation hole 11h may be arranged in at least one of the sides or the rear of the main body 10.

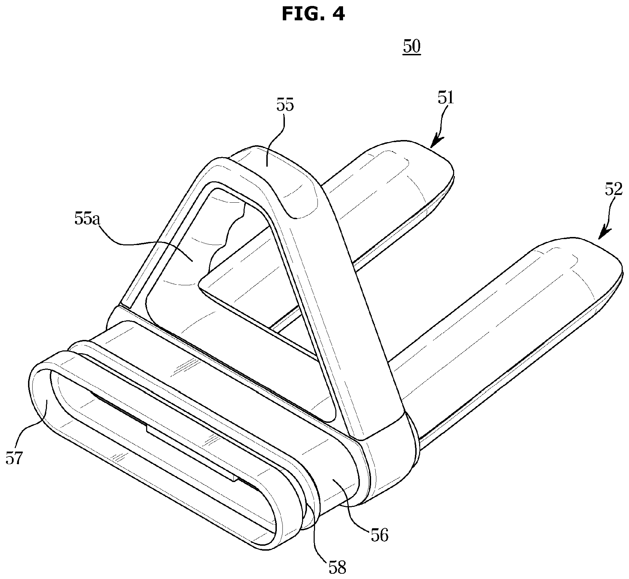

The door 20 may include a hanging member 21 (e.g., a hanger). The hanging member 21 may be arranged on one side of the door 20 facing the interior of the chamber 30 and at least one hanging member may be provided. The hanging member 21 may be used for hanging a handle 55 (refer to FIG. 4) of a holder 50. The hanging member 21 may facilitate storage of the holder 50. The hanging member 21 may be used for other purposes.

The main body 10 may include the outer case 11 and an inner case 12 disposed inside the outer case 11. The inner case 12 may form the chamber 30. The holder 50 on which shoes may be held may be provided inside the chamber 30. The chamber 30 may form a space in which shoes are accommodated. The chamber 30 may include a top surface 12a, a bottom surface 12b, a left surface 12c, a right surface 12d, and a rear surface 12e of the inner case 12.

The holder 50 and an installation rail 80 may be arranged in the chamber 30. The holder 50 and the installation rail 80 may be installed on the left surface 12c or the right surface 12d of the chamber 30. That is, the holder 50 may be installed to show a side of the shoes when viewed from the front of the shoe care apparatus 1. To this end, the side surface of the main body 10 may be formed in a length shorter than a length of the front surface of the main body 10. However, positions of the holder 50 and the installation rail 80 are not limited thereto.

At least one holder 50 may be provided. The holder 50 may be provided in a shape to be inserted into the shoes. In addition, the holder 50 is detachable from the chamber 30. That is, the holder 50 may be coupled to the installation rail 80 arranged on the side surface of the chamber 30 and is detachable from the installation rail 80. For example, the holder 50 may be inserted into the installation rail 80 along the second direction Y. Because the holder 50 is provided detachably, a space in the chamber 30 may be efficiently used depending on a size of the shoes.

The chamber 30 may include an air inlet 60 and an air outlet 31. The air inlet 60 may be formed on a sidewall of the inner case 12. For example, the air inlet 60 may be formed on the left surface 12c of the chamber 30. A plurality of the air inlet 60 mat be provided. Air heated by a condenser 43 may be supplied into the chamber 30 through the air inlet 60. The air inlet 60 may be formed various shapes. For example, a shape of the air inlet 60 may be circular, rectangular, or polygonal.

The air outlet 31 may be arranged on the bottom surface 12b of the chamber 30. For example, the air outlet 31 may be disposed at a front side of the bottom surface 12b. Air in the chamber 30 may flow to a first duct 46 through the air outlet 31. The air outlet 31 may be comprised of a central hole 31a and a grille 31b including a plurality of side holes.

The machine room 32 may be arranged under the chamber 30. The machine room 32 may be disposed between the outer case 11 and the inner case 12. The machine room 32 may be distinguished from the chamber 30 by the inner case 12. Although not illustrated, a machine room cover may be provided at the rear of the main body 10. The machine room cover may be provided in a lower portion of the outer case 11 to correspond to a position of the machine room 32. Further, the machine room cover may include at least one ventilation hole 11h for ventilation between air inside the machine room 32 and outside air.

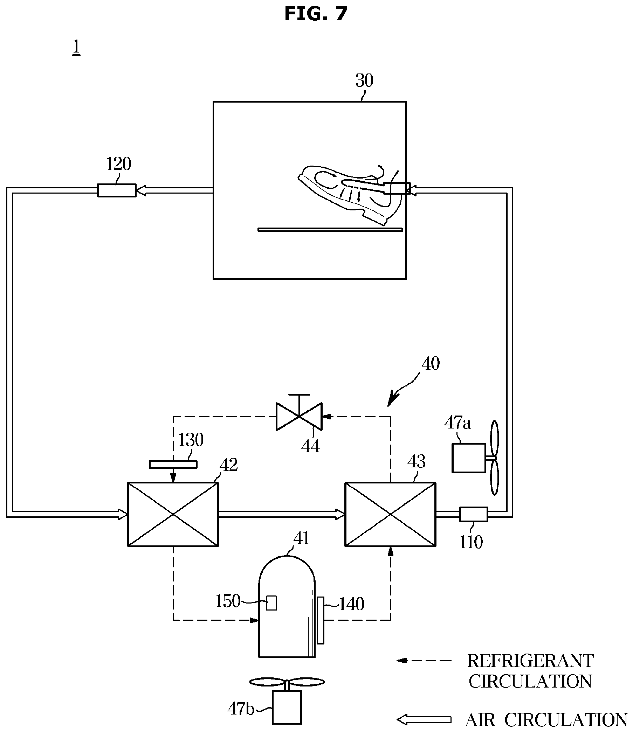

In the machine room 32, provided are a compressor 41, an evaporator 42, the condenser 43, an expansion device 44 (e.g., an expander) (refer to FIGS. 7-8), a deodorizer 45, the first duct 46, a first fan 47a, a second fan 47b, a first temperature sensor 110, and a second temperature sensor 120. In addition, a sterilizer 49 may be arranged within the chamber 30 or within the machine room 32. In FIG. 2 and FIG. 3, the sterilizer 49 is shown as being provided within the chamber 30.

The compressor 41, the evaporator 42, the condenser 43, and the expansion device 44 may be defined as a heat pump device 40 (e.g., a heat pump) (refer to FIGS. 7-8). The heat pump device 40 may dehumidify and heat air circulating through the chamber 30. The heat pump device 40 may supply heated air into the chamber 30.

The machine room 32 may be provided with a third temperature sensor 130 (refer to FIGS. 7-8) arranged on an inlet side of the evaporator 42, a fourth temperature sensor 140 (refer to FIGS. 7-8) arranged on an outlet side of the compressor 41, and a current sensor 150 (refer to FIGS. 7-8) that measures a compressor current applied to the compressor 41.

The first duct 46 is a duct positioned under the chamber 30 and may be connected to the chamber 30. That is, the first duct 46 may be connected to the bottom surface 12b of the chamber 30. The first duct 46 may be referred to as a lower duct. The first duct 46 may be connected to the air outlet 31 to form a first flow path 46a that guides the air having passed the air outlet 31 to the first fan 47a. Also, the first duct 46 may be connected to a second duct 70 arranged within a side of the main body 10. A space inside the first duct 46 may be separated from the machine room 32.

The second duct 70 may be referred to as a upper duct. The second duct 70 may be provided outside of a sidewall of the inner case 12 in the second direction Y or the first direction X of the shoe care apparatus 1. One end of the second duct 70 may be connected to at least one air inlet 60 (also referred to as a "supply port"), and the other end may be connected to the first duct 46. The second duct 70 may form a second flow path 71 that guides air to the air inlet 60.

The evaporator 42 and the condenser 43 may be disposed in the first duct 46. The evaporator 42, the condenser 43 and the first fan 47a may be arranged in the first direction X. The first fan 47a may be installed inside the first duct 46 or between the first duct 46 and the second duct 70. The evaporator 42 may be located further upstream of the air flow than the condenser 43. The compressor 41 may be located outside of the first duct 46. The compressor 41, the evaporator 42, and the condenser 43 may be connected by refrigerant pipes.

An interior space of the chamber 30 and the first duct 46 may be separated from the machine room 32 in which the compressor 41 is located. That is, the first flow path 46a may be separated from the machine room 32. Air flowing through the chamber 30 and the first flow path 46a of the first duct 46 may not flow out to the machine room 32, and air inside the machine room 32 may not flow into the first duct 46 and the chamber 30.

The first fan 47a may be provided between the heat pump device 40 and the chamber 30 to circulate air. The first fan 47a may rotate based on a predetermined revolutions per minute (RPM). Specifically, the first fan 47a may intake air brought into the first duct 46 and discharge the air to the second duct 70. The air brought into the first duct 46 through the air outlet 31 may be dried while passing the evaporator 42 of the heat pump device 40, heated while passing the condenser 43, and then discharged back to the chamber 30 through the second duct 70 and the air inlet 60.

The second fan 47b may be located outside the first duct 46. For example, the second fan 47b may be disposed adjacent to the compressor 41. The second fan 47b may move air in the machine room 32. The second fan 47b may blow towards the compressor 41 and/or the first duct 46. The second fan 47b may also be disposed adjacent to the at least one ventilation hole 11h. The second fan 47b may move air in the machine room 32 to the outside through the at least one ventilation hole 11h, and may draw outside air into the machine room 32. Wind generated by the operation of the second fan 47b may cool the compressor 41 and the first duct 46, and may reduce a temperature in the machine room 32.

A rotation speed of the second fan 47b may be controlled within a predetermined range of a minimum rotation speed and a maximum rotation speed. For example, the rotation speed of the second fan 47b may be set within a range of 1500 RPM and 2400 RPM. The minimum and maximum rotation speeds of the second fan 47b may vary according to embodiments.

The heat of hot outside air and the heat generated by the compressor 41 may be conducted or radiated through the first duct 46 to the air flowing through the first flow path 46a. When heat from the outside is transferred into the chamber 30 through the first duct 46, heat buildup inside the chamber 30 may increase, preventing the temperature in the chamber 30 from maintaining at a target temperature. By locating the second fan 47b within the machine room 32, overheating in the chamber 30 may be suppressed.

The first fan 47a and the second fan 47b may each include a motor and a blade. The blade may be rotated by motion of the motor. The rotation of the blade may cause air to flow. The first fan 47a and the second fan 47b may be of various types. For example, the first fan 47a and the second fan 47b may each be provided as a centrifugal fan.

Also, the deodorizer 45 may be disposed in the first duct 46. The deodorizer 45 may include a deodorizing filter 45a and ultraviolet light emitting diode (UV LED) 45b. The deodorizing filter 45a and the UV LED 45b may be disposed adjacent to the air outlet 31 of the chamber 30. The UV LED 45b may irradiate light to the deodorizing filter 45a to remove odors from the air. For example, the deodorizing filter 45a may include at least one from among a ceramic filter, a photocatalytic filter, and an activated carbon filter.

The sterilizer 49 may be further disposed in the chamber 30 or in the first duct 46. The sterilizer 49 may remove germs contained in the air. The sterilizer 49 may include at least one from among an ultraviolet lamp, an ultraviolet LED, a xenon lamp, an ozone generator, and a sterilizing spray.

A drain tub 48 may be disposed in a lower portion of the main body 10, i.e., underneath the machine room 32. The drain tub 48 may store condensate water produced by the evaporator 42. The drain tub 48 is detachable from the main body 10.

At least one shelf 90 may be arranged in the chamber 30. Shoes may be placed on the at least one shelf 90. In addition, the at least one shelf 90 may include a duct shelf 103. The duct shelf 103 may form a flow path 103b therein and may include a hole 103a at a lower surface thereof. Air rising from the first fan 47a through the second duct 70 may be discharged into the chamber 30 through the hole 103a of the duct shelf 103. In addition, the duct shelf 103 may be formed with a hole 106 at a top surface thereof.

A side surface of the duct shelf 103 may be connected to a circular duct 104 disposed in the second duct 70. Air may be discharged into the chamber 30 through a nozzle 104a of the circular duct 104. Air may be supplied to the duct shelf 103 after passing the circular duct 104. The circular duct 104 may have various shapes. For example, the circular duct 104 may have a fan shape.

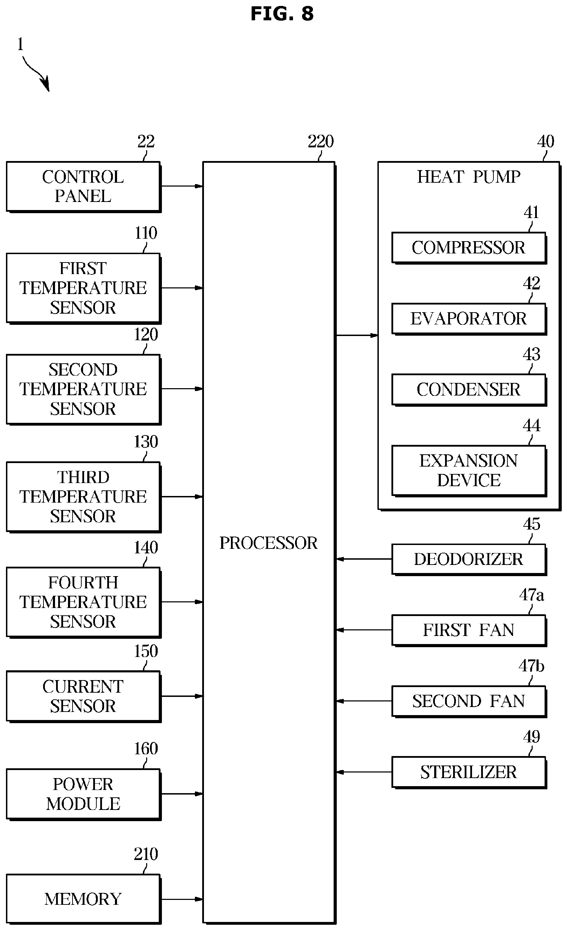

The first temperature sensor 110 may measure a first temperature of air heated by the condenser 43. The first temperature sensor 110 may also be referred to as an "introduced air temperature sensor." Hereinafter, a temperature of the air measured by the first temperature sensor 110 is defined as the first temperature. The first temperature sensor 110 may be arranged in a flow path between the condenser 43 and the first fan 47a. A processor 220 (refer to FIG. 8) of the shoe care apparatus 1 may control an operation frequency of the compressor 41 based on the first temperature measured by the first temperature sensor 110.

The second temperature sensor 120 may measure a temperature of air at the air outlet 31 of the chamber 30. The second temperature sensor 120 may also be referred to as an "discharged air temperature sensor." The second temperature sensor 120 may be disposed in a flow path between the air outlet 31 and the deodorizing filter 45a, or between the deodorizing filter 45a and the evaporator 42. A temperature of the air measured by the second temperature sensor 120 is hereinafter defined as the second temperature. The processor 220 of the shoe care apparatus 1 may determine an outside air temperature based on the second temperature measured by the second temperature sensor 120 at a start of operation of the shoe care apparatus 1.

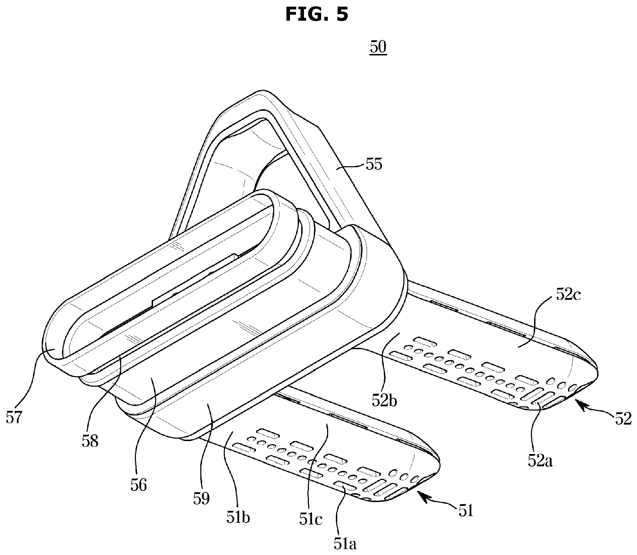

FIG. 4 is a perspective view of a holder installed in a chamber viewed from above. FIG. 5 is a perspective view of a holder installed in a chamber viewed from below.

Referring to FIG. 4 and FIG. 5, the holder 50 may include support frames (e.g., a first support frame 51 and a second support frame 52), a handle 55, a support body 56, and a coupler 57. The support body 56 may connect the handle 55, the coupler 57, the first support frame 51, and the second support frame 52.

The support frames may include the first support frame 51 and the second support frame 52. The first support frame 51 and the second support frame 52 protrude from a side surface of the chamber 30 in the first direction X and may be spaced apart from each other in the second direction Y. Although two support frames are shown, one or more than two support frames may be provided. Because the first support frame 51 and the second support frame 52 are spaced apart from each other in the second direction Y, a plurality of shoes may be held thereon.

Meanwhile, the first support frame 51 and the second support frame 52 may be inclined at a predetermined angle to prevent the shoes caught from falling out. That is, the first support frame 51 and the second support frame 52 may be inclined upwardly with respect to the bottom surface 12b of the chamber 30. Accordingly, the shoes held by the holder 50 may be prevented from falling out.

The handle 55 may facilitate moving or detaching the holder 50. A user may move the holder 50 by gripping the handle 55. **In** addition, the user may easily mount the holder 50 on the installation rail 80 using the handle 55. The handle 55 may be of various shapes. For example, the handle 55 may be provided in a triangular shape. In addition, a grip member 55a (e.g., a grip) may be formed on the handle 55. The user may easily grip the handle 55 using the grip member 55a.

The coupler 57 may be connected to the air inlet 60 and guide the air supplied through the second duct 70 to the first support frame 51 and the second support frame 52. The coupler 57 is shown as having a hollow oval shape, but is not limited thereto and may be provided in various shapes.

Referring to FIG. 5, the first support frame 51 and the second support frame 52 of the holder 50 may include a first nozzle 51a and a second nozzle 52a, respectively. The first support frame 51 may include the first nozzle 51a and the second support frame 52 may include the second nozzle 52a. The first nozzle 51a and the second nozzle 52a may be formed on at least one of bottom surfaces 51b and 52b or side surfaces 51c and 52c of the support frames. The first nozzle 51a and the second nozzle 52a may be provided in various shapes. For example, the first nozzle 51a and the second nozzle 52a may be circular, elliptical or rectangular. Heated air may be supplied to the chamber 30 through the first nozzle 51a and the second nozzle 52a.

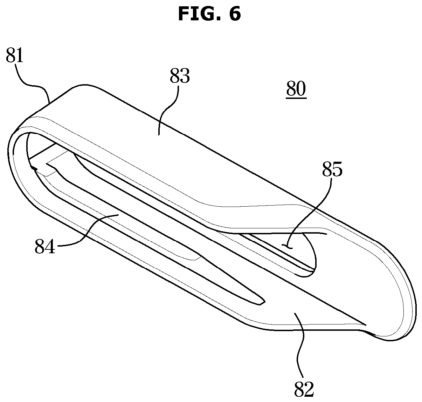

The holder 50 may further include a fastening groove 58. A fixing projection 84 (refer to FIG. 6) of the installation rail 80 may be inserted into the fastening groove 58 to fix the holder 50. The holder 50 may further include a reinforcing member 59. The reinforcing member 59 is connected to the handle 55 to reinforce the support body 56.

FIG. 6 illustrates an installation rail installed in a chamber.

Referring to FIG. 6, one end 81 of the installation rail 80 is closed to prevent the holder 50 from falling out, and the other end 82 of the installation rail 80 has an open form so that the holder 50 may be inserted therein. The installation rail 80 may include a fixing frame 83 and the fixing projection 84.

The fixing frame 83 extends from the one end 81 of the installation rail 80 to the other end 82 and may receive the coupler 57 of the holder 50. The fixing projection 84 may be inserted into the fastening groove 58 of the holder 50. The holder 50 may thus be fixed to the installation rail 80. The holder 50 is detachable from the installation rail 80.

Also, the installation rail 80 may include an air hole 85. Air brought in through the second duct 70 and the air inlet 60 of the chamber 30 may be supplied to the holder 50 through the air hole 85 in the installation rail 80. That is, air brought in from the air inlet 60 may be supplied to the first support frame 51 and the second support frame 52 of the holder 50 through the air hole 85, and may be sprayed into the chamber 30 through the first nozzle 51a and the second nozzle 52a.

FIG. 7 is a schematic diagram illustrating a flow of air and refrigerant in a shoe care apparatus according to an embodiment.

Referring to FIG. 7, the shoe care apparatus 1 according to an embodiment may include the chamber 30 for receiving an object S (e.g., shoes) to be dried, the heat pump device 40 dehumidifying and heating air in the chamber 30 to dry the object S, the first temperature sensor 110 measuring a first temperature of air heated by the condenser 43, the second temperature sensor 120 measuring a second temperature of the air having passed through the air outlet 31 of the chamber 30, the first fan 47a provided between the chamber 30 and the heat pump device 40 for circulating air, and the second fan 47b provided outside the first duct 46 for circulating air in the machine room 32.

The heat pump device 40 includes the compressor 41, the condenser 43, the expansion device 44, and the evaporator 42. The compressor 41, the condenser 43, the expansion device 44, and the evaporator 42 may be connected to each other by refrigerant pipes to form a heat pump cycle, and a refrigerant may be circulated in accordance with the heat pump cycle while flowing in the refrigerant pipes. The evaporator 42 and condenser 43 may be located inside the first duct 46, and the compressor 41 and expansion device 44 may be located outside the first duct 46.

The compressor 41 compresses a low-temperature and low-pressure vapor-phase refrigerant and discharges a high-temperature and high-pressure vapor-phase refrigerant. The discharged vapor-phase refrigerant may flow into the condenser 43, and the high-temperature and high-pressure vapor-phase refrigerant may be condensed into a high-pressure liquid-state or approximately liquid-state refrigerant equal to or lower than a condensation temperature. The high-pressure liquid-state or approximately liquid-state refrigerant that has passed the condenser 43 is expanded and decompressed by the expansion device 44, and the low-temperature and low-pressure two-phase refrigerant that has passed the expansion device 44 flows into the evaporator 42. The two-phase refrigerant may be evaporated to vapor-phase refrigerant in the evaporator 42.

The chamber 30 and the heat pump device 40 may be connected by the first duct 46 and the second duct 70, and the air in the chamber 30 moves through the duct and may be circulated between the heat pump device 40 and the chamber 30.

Hot and humid air in the chamber 30 may exchange heat with the refrigerant while passing the evaporator 42. Specifically, the low-temperature and low-pressure two-phase refrigerant brought into the evaporator 42 may be evaporated into a vapor-phase refrigerant by absorbing heat from the hot and humid air passing the evaporator 42. The hot and humid air passing the evaporator 42 is cooled and dehumidified at the same time into cool and dry air.

After passing the evaporator 42, the cool and dry air flows into the condenser 43, and heat exchange may occur between the high-temperature and high-pressure vapor-phase refrigerant and the cool and dry air in the condenser 43. The high-temperature and high-pressure vapor-phase refrigerant may release heat while being condensed into a liquid-phase or approximately liquid-phase refrigerant and, and the cool and dry air may be heated by absorbing the heat released during the condensation of the refrigerant.

The hot and dry air having passed the condenser 43 may flow back into the chamber 30. The object S (e.g., shoes) accommodated in the chamber 30 may be dried by such an air circulation cycle.

The expansion device 44 may be implemented with at least one of a capillary tube or an electrical expansion valve that may control opening degrees based on an electrical signal.

The compressor 41 may be implemented as a frequency changeable inverter compressor. The frequency of the compressor 41 refers to revolutions per second of a motor connected to a compression room of the compressor 41. The compressor 41 may operate at a predetermined starting frequency at the start of a dry course, and afterward, to increase the temperature, the compressor 41 may operate at an operation frequency. Meanwhile, the compressor 41 may operate within a range from a minimum frequency and a maximum frequency. A minimum operation frequency and a maximum operation frequency may be set in advance depending on the embodiment.

The shoe care apparatus 1 may further include the third temperature sensor 130 provided at an inlet side of the evaporator 42, and the fourth temperature sensor 140 provided at an outlet side of the compressor 41. The third temperature sensor 130 may be referred to as an "evaporator inlet temperature sensor" and the fourth temperature sensor 140 may be referred to as a "compressor outlet temperature sensor." The third temperature sensor 130 and the fourth temperature sensor 140 may be installed outside or inside of the refrigerant pipe, respectively, to measure a temperature of the refrigerant circulating in the heat pump cycle. The third temperature sensor 130 may measure a temperature of the refrigerant flowing into the evaporator 42, and the fourth temperature sensor 140 may measure a temperature of the refrigerant discharged from the compressor 41.

The shoe care apparatus 1 may further include the current sensor 150 that measures a compressor current applied to the compressor 41. The current sensor 150 may measure a power consumed by the compressor 41.

FIG. 8 is a control block diagram of a shoe care apparatus according to an embodiment.

Referring to FIG. 8, the shoe care apparatus 1 may include the control panel 22, the heat pump device 40, the deodorizer 45, the first fan 47a, the second fan 47b, the sterilizer 49, the first temperature sensor 110, the second temperature sensor 120, the third temperature sensor 130, the fourth temperature sensor 140, the current sensor 150, a power module 160, a memory 210 and the processor 220. Although not illustrated, the shoe care apparatus 1 may further include a communication device for transmitting and receiving data with an external device. The processor 220 may be electrically connected to the aforementioned constituent components of the shoe care apparatus 1 and control operations of the constituent components.

The power module 160 may supply power to the constituent components of the shoe care apparatus 1. The power module 160 may be implemented with a printed circuit board and a power circuit mounted on the printed circuit board. For example, the power module 160 may include a capacitor, a coil, a resistor, a processor, and the like, which are mounted on the power circuit board.

The shoe care apparatus 1 may include the memory 210 storing programs, instructions and data for controlling operations of the shoe care apparatus 1. The shoe care apparatus 1 may also include the processor 220 generating a control signal for controlling operations of the shoe care apparatus 1 based on the programs, instructions and/or data recorded and/or stored in the memory 210. The processor 220 and the memory 210 may be implemented as a single control circuit or as a plurality of circuits.

The processor 220 may include a logic circuit and an operational circuit in hardware. The processor 220 may process data according to the program and/or instruction provided from the memory 210, and generate a control signal according to a result of the processing. For example, when a user inputs a command through the control panel 22, the processor 220 may process the input command and controls each component of the shoe care apparatus 1 to perform an operation corresponding to the input command.

The memory 210 may include a volatile memory, such as Static Random Access Memory (SRAM) or Dynamic Random Access Memory (DRAM), for temporary storage of data, and a non-volatile memory, such as Read Only Memory (ROM), Erasable Programmable Read Only Memory (EPROM), or Electrically Erasable Programmable Read Only Memory (EEPROM), for long-term storage of data.

As described in FIG. 1, the control panel 22 may be arranged on the door 20. Although the control panel 22 is illustrated as being arranged on a front surface of the door 20, a position of the control panel 22 is not limited thereto and may be provided in various positions. The processor 220 may determine a target temperature based on a selection signal of a shoe type and care course transmitted from the control panel 22. Also, the processor 220 may determine an operation time of the shoe care apparatus 1 based on the selected shoe type and care course.

A user may use the control panel 22 to select a shoe type to be cared for. For example, the control panel 22 may provide at least one of a shoe type menu to allow the user to select a shoe type, or a care course menu to allow the user to select a care course. Shoe types may include types according to use or shape, such as heels, sneakers, hiking shoes, boots, sandals, rain boots, and the like. The shoe types may also include types according to material, such as leather, cotton, nylon, synthetic materials, silk, enamel, suede, neoprene, and the like.

The processor 220 may determine a target temperature of air to be supplied into the chamber 30 based on a shoe type. Because different types of shoes have different characteristics, the target temperature for caring the shoes may be set differently according to the characteristics of the shoes. For example, for shoes of synthetic materials, a low target temperature of 30°C or higher and less than 38°C may be set. For shoes of a leather material, a medium target temperature of 38°C or higher and less than 43°C may be set. For shoes of a cotton material, a high target temperature of 43°C or higher and less than 60°C may be set.

As another example, when two or more types of shoes are to be cared for or the shoes contain moisture, a target temperature for dehumidification may be set to less than 40°C, and a target temperature for deodorization may be set to 40°C or higher and less than 60°C. By setting the target temperature as described above, damage to the shoes may be prevented. Furthermore, when both dehumidification and deodorization are required, deodorization may be performed after dehumidification. Specifically, the moisture contained in the shoes is removed at a low temperature and deodorization is then performed at a high temperature, thereby minimizing the damage to the shoes.

In addition, the user may use the control panel 22 to set a suitable care course. The processor 220 may determine an operation time of the shoe care apparatus 1 based on the selected care course. For example, the care course may include at least one from among a standard course, a quick course, an intense course, and a clean storage course. The standard course is a default care course, and may be defined as a care course in which the shoe care apparatus 1 is operated for a standard time (e.g., 30 minutes) for which dehumidification and deodorization effects are normally exerted. The quick course may be defined as a care course that may exert minimum dehumidification and deodorization effects within a shorter time than in the standard course. The intense course may be defined as a care course that may exert maximum dehumidification and deodorization effects by being operated for a longer time than in the standard course. Furthermore, the clean storage course may be defined as a care course for keeping the shoes for a long time. As such, various care courses may be suitably applied to various shoes, thereby increasing convenience of shoe caring and user satisfaction.

The processor 220 may determine an outside air temperature based on a temperature measured by the second temperature sensor 120 at the start of operation of the shoe care apparatus 1. Before the start of operation of the shoe care apparatus 1, the door 20 may be opened to put shoes into the chamber 30. In this case, the temperature of the air in the chamber 30 is equivalent to the outside air temperature. Also, at the start of operation of the shoe care apparatus 1, the air in the chamber 30 is in a non-heated state. Accordingly, at the start of operation of the shoe care apparatus 1, the outside air temperature may be determined by using the second temperature sensor 120 located at the air outlet 31 of the chamber 30.

The processor 220 may determine an operation frequency of the compressor 41 based on the target temperature and the outside air temperature, and operate the compressor 41 at the determined operation frequency. The target temperature and the outside air temperature are factors that have large influences on determination of an operation frequency of the compressor 41. For example, based on the outside air temperature being a low temperature, the processor 220 may set the operation frequency of the compressor 41 to a high value to force the temperature of the air supplied into the chamber 30 to quickly reach the target temperature. The larger the difference between the outside air temperature and the target temperature, the higher value the operation frequency of the compressor 41 may be set to. On the contrary, based on the difference between the target temperature and the outside air temperature being small (e.g., when the difference between the target temperature and the outside air temperature is 10°C or less), the operation frequency of the compressor 41 may be set to a low value, because when the temperature in the chamber 30 rises suddenly, it may exceed the target temperature.

Also, the processor 220 may control the operation frequency of the compressor 41 based on a temperature of the air heated by the condenser 43 and the target temperature. Specifically, the processor 220 may control the operation frequency of the compressor 41 based on the first temperature measured by the first temperature sensor 110. When the compressor 41 is operated at a fixed operation frequency for the whole operation time, the temperature of the air circulating in the shoe care apparatus 1 may constantly rise, failing to maintain the constant target temperature. To prevent the above, the operation frequency of the compressor 41 may be controlled.

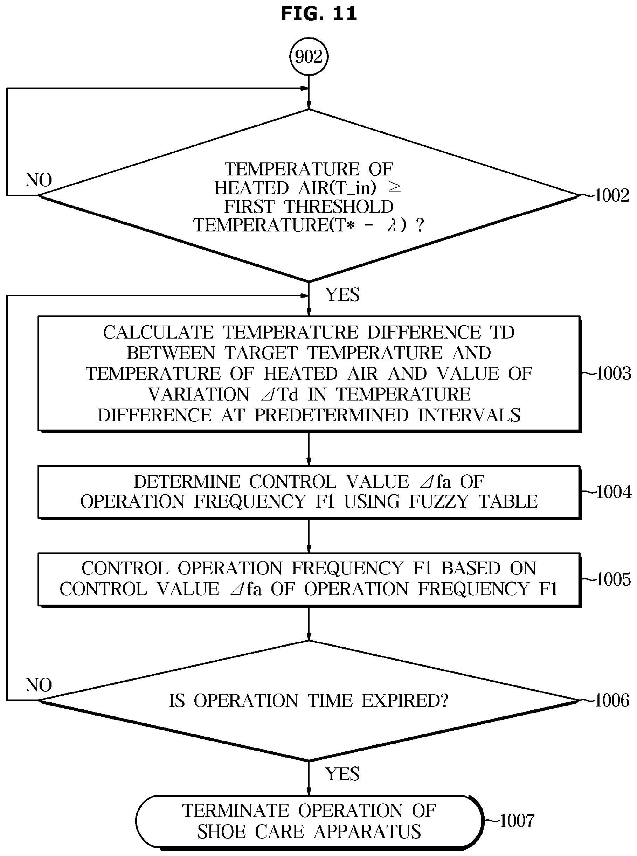

To maintain the air supplied into the chamber 30 at the target temperature, the processor 220 of the shoe care apparatus 1 performs fuzzy control. The fuzzy control refers to a control method of periodically controlling the operation frequency of the compressor 41 for the first temperature of the air heated by the condenser 43 to follow the target temperature. The processor 220 may increase or decrease the operation frequency of the compressor 41 for the first temperature to follow the target temperature, in response to the first temperature reaching a predetermined first threshold temperature. The processor 220 may use a fuzzy table stored in advance to determine a control value of the operation frequency. The fuzzy control will be described in detail with reference to FIG. 11.

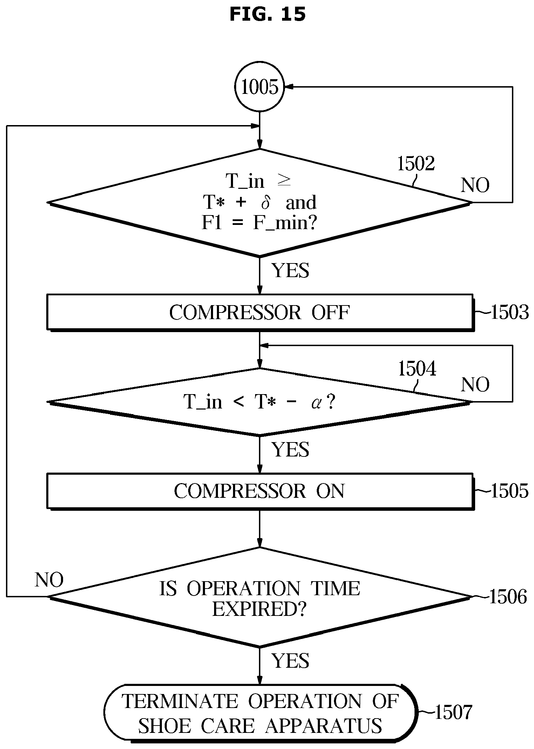

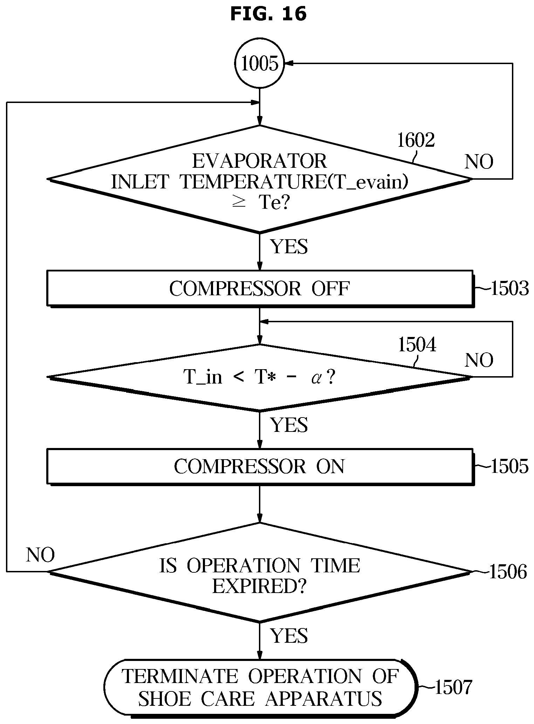

However, in response to the outside air temperature being high (e.g., the outside air temperature equal to or higher than 30 °C) or in response to the target temperature being high (e.g., the target temperature equal to or higher than 43 °C), the target temperature may not be maintained only by fuzzy control that controls a frequency of the compressor 41. For example, when heat from the hot outside air and heat generated by the compressor 41 is transferred into the chamber 30 through the first duct 46, heat buildup inside the chamber 30 increases, preventing the temperature in the chamber 30 from maintaining at the target temperature. To complement the limit of the fuzzy control, the processor 220 may further perform compressor switching control. The compressor switching control refers to a control method for switching the compressor 41 on or off. The compressor switching control will be described in detail with reference to FIG. 15 and FIG. 16.

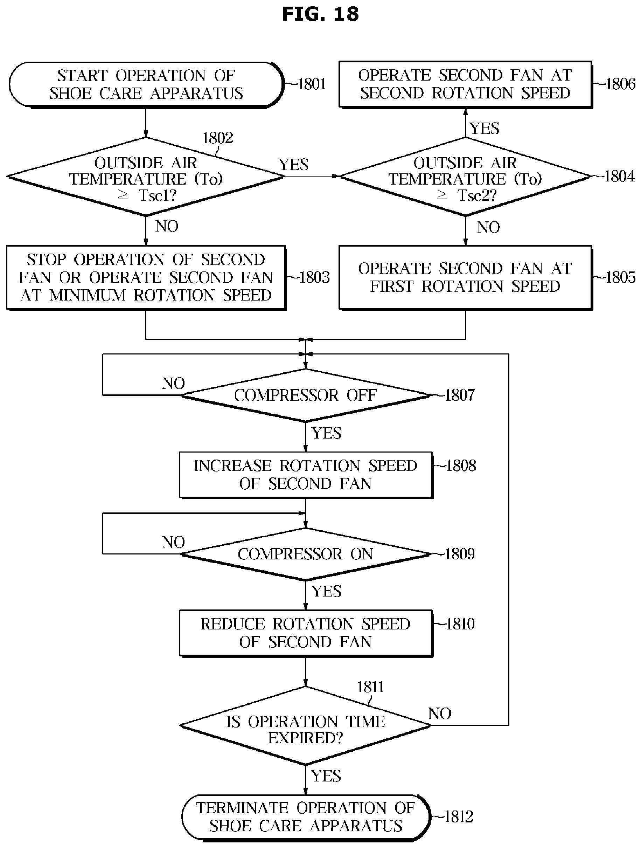

Meanwhile, when periods in which the operation of the compressor 41 is stopped increases or becomes longer, an operating rate of the compressor 41 may decrease, causing performance reduction and target temperature following capability. In order to increase the operating rate of the compressor, the processor 220 may control an operation of the second fan 47b located in the machine room 32. By operating the second fan 47b in an environment where an outside air temperature is high, overheating of the air supplied into the chamber 30 may be suppressed and an operation period of the compressor 41 may be increased. In response to the operation period of the compressor 41 being increased, the operating rate of the compressor 41 increases. A control method of the second fan 47b will be described in detail with reference to FIG. 18.

Furthermore, to prevent damage caused by excessive current applied to the compressor 41, the processor 220 may perform compressor current control. The compressor current control refers to a control method for controlling a current applied to the compressor 41 by periodically controlling the operation frequency of the compressor 41 based on a current value or power value applied to the compressor 41. That is, the processor 220 may control the operation frequency of the compressor 41 so that the compressor current is equal to or less than a predetermined limit current. The processor 220 may use a pre-stored current control table to determine a control value of the operation frequency. The compressor current control will be described in detail with reference to FIG. 18.

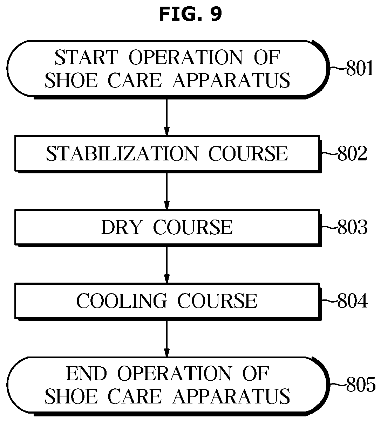

FIG. 9 is a flowchart schematically illustrating overall operations of a shoe care apparatus according to an embodiment.

Referring to FIG. 9, the overall operations of the shoe care apparatus 1 may include performing a stabilization course 802, a dry course 803 and a cooling course 804. Through the stabilization course 802, the dry course 803 and the cooling course 804, shoes placed in the chamber 30 may be dried and deodorized.

The processor 220 may start an operation of the shoe care apparatus 1 based on a user input obtained by the control panel 22 (801). At the start of the operation of the shoe care apparatus 1, the processor 220 may determine a target temperature of air to be supplied into the chamber 30 based on the user input. With the determining of the target temperature, an operation time of the shoe care apparatus 1 may be determined as well. As described above, the target temperature may be determined based on a selection of a shoe type input through the control panel 22, and the operation time may be determined based on a selection of a care course. An operation frequency of the compressor 41 may also be determined.

The processor 220 may perform the stabilization course 802. In the stabilization course, the processor 220 may operate the first fan 47a for a predetermined stabilization time. The processor 220 may operate at least one from among the deodorizer 45 and the sterilizer 49 as well as the first fan 47a. In the stabilization course, the compressor 41 may not be operated. Sudden application of a heavy load to the power module 160 and the processor 220 may be prevented through the stabilization course. Furthermore, whether the fan 47 has a failure may be detected by the processor 220 in the stabilization course.

Also, the processor 220 may determine whether to operate the second fan 47b based on whether an outside air temperature is equal to or higher than a predetermined first operation temperature. For example, based on the outside air temperature being less than the first operation temperature, the processor 220 may stop the operation of the second fan 47b. In contrast, based on the outside air temperature being equal to or higher than the first operation temperature, the processor 220 may determine a start of the operation of the second fan 47b. In addition, based on whether the outside air temperature is equal to or higher than a predetermined second operation temperature, the processor 220 may determine a rotation speed of the second fan 47b. The second operation temperature may be set in advance to be higher than the first operation temperature. For example, the first operation temperature may be set to 23 °C, and the second operation temperature may be set to 30°C. The processor 220 may operate the second fan 47b at a first rotation speed (e.g., a base rotation speed of 2000 RPM), based on the outside air temperature being higher than the first operation temperature and lower than the second operation temperature, and may operate the second fan 47b at a second rotation speed (e.g., a maximum rotation speed of 2400 RPM) that is faster than the first rotation speed, based on the outside air temperature being equal to or higher than the second operation temperature.

Meanwhile, even when the outside air temperature is lower than the first operation temperature, the processor 220 may operate the second fan 47b at a predetermined rotation speed (e.g., a minimum rotation speed of 1500 RPM) in order to detect a failure in the second fan 47b and reduce a temperature in the machine room 32 including the compressor 41 even slightly before starting the dry course.

Subsequently, the processor 220 may perform the dry course 803. In the dry course, the processor 220 may operate the compressor 41 at an operation frequency F1 for a predetermined drying time and operate the first fan 47a in connection with the operation of the compressor 41. The temperature of the air in the chamber 30 may be increased by operating the compressor 41 at the operation frequency F1. In response to the temperature of the air reaching the target temperature, the processor 220 may control the operation frequency F1 of the compressor 41. The target temperature may be maintained by controlling the operation frequency F1 of the compressor 41.

In addition, in the dry course 803, the processor 220 may control the operation of the second fan 47b based on an operation state of the compressor 41. For example, the processor 220 may increase a rotation speed of the second fan 47b in response to an operation stoppage of the compressor 41, and decrease the rotation speed of the second fan 47b in response to a resumption of the operation of the compressor 41.

In response to the operation of the compressor 41 being stopped according to the compressor switching control, the compressor 41 and the first duct 46 may be cooled even faster by increasing the rotation speed of the second fan 47b. When the compressor 41 and the first duct 46 are cooled faster, a temperature of the air supplied into the chamber 30 may also decrease faster. As the time for the temperature of the air supplied into the chamber 30 to fall below the target temperature decreases, a downtime of the compressor 41 may also decrease. As the downtime of the compressor 41 decreases, the operation time of the compressor 41 may increase. Accordingly, the operating rate of the compressor 41 may increase.

Next, the processor 220 may perform the cooling course 804. In the cooling course 804, the processor 220 may operate the first fan 47a for a predetermined cooling time. The processor 220 may operate at least one from among deodorizer 45 and the sterilizer 49 as well as the first fan 47a. Furthermore, the processor 220 may simultaneously operate the second fan 47b together during the cooling time.

In the cooling course, the compressor 41 is not operated. Through the cooling course, a temperature in the chamber 30 may be forced to decrease and the dried shoes may be cooled. Accordingly, after completion of the operation of the shoe care apparatus 1, the user may safely take out the shoes.

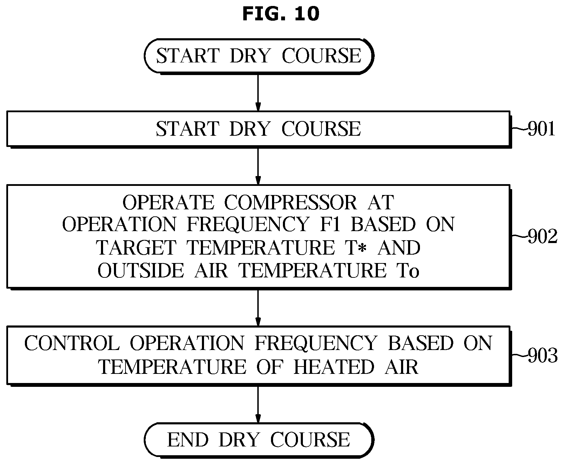

FIG. 10 is a flowchart schematically illustrating operations of a compressor in a dry course.

Referring to FIG. 10, the processor 220 may first operate the compressor 41 for a certain time at a starting frequency F0 (901). The processor 220 may determine an operation frequency F1 of the compressor 41 based on the target temperature T* and the outside air temperature To, and operate the compressor 41 at the determined operation frequency F1 (902). The target temperature T* may be determined based on user input, and the outside air temperature To may be determined based on a second temperature measured by the second temperature sensor 120 at a start of operation of the shoe care apparatus 1.

Meanwhile, the process of operating the compressor 41 at the starting frequency F0 may be omitted. That is, the compressor 41 may be operated based on the operation frequency F1 from a beginning of the dry course.

Subsequently, the processor 220 may control the operation frequency of the compressor 41 based on a temperature T_in of the air heated by the condenser 43 and the target temperature T* (903).

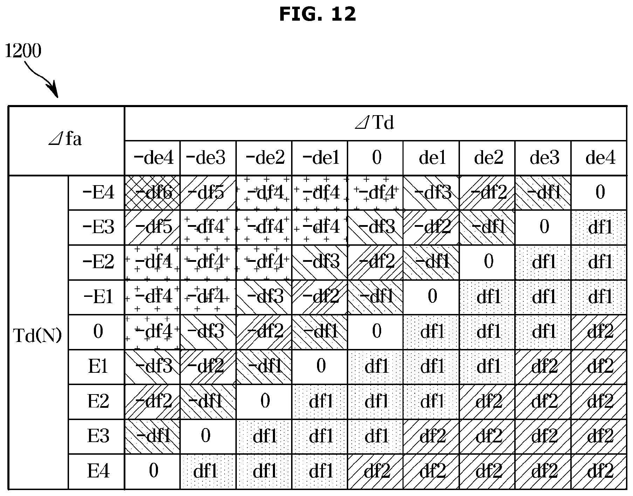

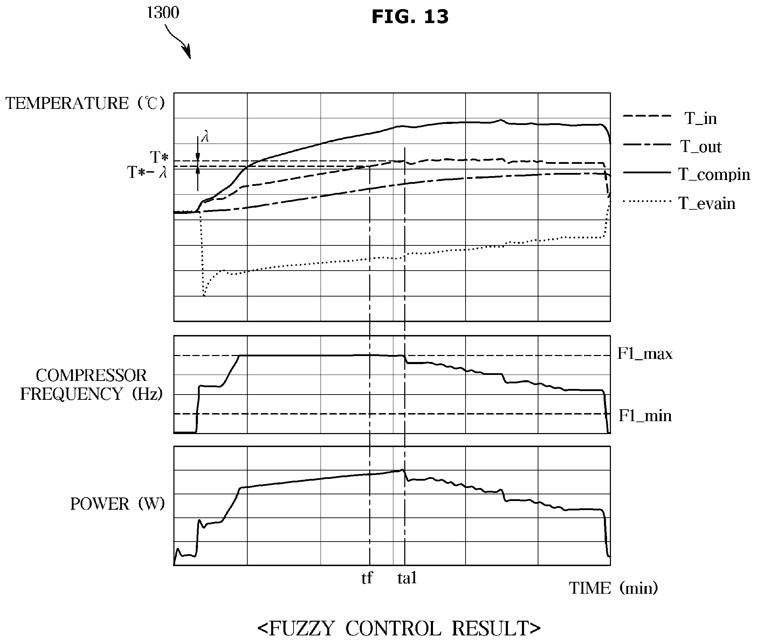

FIG. 11 is a flowchart illustrating fuzzy control in a method of controlling a shoe care apparatus according to an embodiment. FIG. 12 illustrates a fuzzy table. FIG. 13 is a graph illustrating a result of fuzzy control.

Referring to FIG. 11, operation 902 is the same as described above. The processor 220 may operate the compressor 41 at the operation frequency F1 determined based on the target temperature T* and the outside air temperature To (902).

The processor 220 may check the temperature T_in of the air heated by the condenser 43. Specifically, the processor 220 may check whether the temperature T_in reaches a predetermined first threshold temperature T* - λ (1002). Referring to a graph 1300 of FIG. 13, the operation frequency F1 may be set to a maximum frequency F1_max of the compressor 41. The temperature of the air heated by the condenser 43 is measured by the first temperature sensor 110 and is defined as the temperature T_in (also referred to as "first temperature").

When the temperature T_in reaches the first threshold temperature T* - λ, fuzzy control may be started. As shown in the graph 1300 of FIG. 13, the fuzzy control may be started at a point in time tf at which the temperature T_in reaches the first threshold temperature T* - λ. That is, when the temperature T_in reaches the predetermined first threshold temperature T* - λ, the processor 220 may increase or decrease the operation frequency F1 of the compressor 41 for the temperature T_in to follow the target temperature T*. The processor 220 may use a fuzzy table 1200, that is pre-stored, to determine a control value Δfa of the operation frequency F1, and control the operation frequency F1 of the compressor 41 based on the control value Δfa.

Specifically, the processor 220 may calculate a temperature difference Td(N) between the target temperature T* and the temperature T_in and a value of variation ΔTd in temperature difference at predetermined intervals (1003). The value of variation ΔTd in temperature difference may be calculated by subtracting a previous temperature difference Td(N-1) from the current temperature difference Td(N). The processor 220 may determine the control value Δfa corresponding to the value of variation ΔTd in temperature difference and the temperature difference Td(N) by referring to the fuzzy table 1200 (1004). For example, in FIG. 12, when the current temperature difference Td(N) is E1 and the value of variation ΔTd in temperature difference is calculated to be - dE2, the control value Δfa of the operation frequency F1 may be determined to be -df1. The control value Δfa as mentioned in the fuzzy control may be referred to as a 'first control value'.

The processor 220 may control the operation frequency F1 based on the control value Δfa (1005). That is, controlling of the operation frequency F1 may be performed by adding the control value Δfa to the previous operation frequency F1(N-1). For example, when the previous operation frequency F1(N-1) is 40 Hz, the operation frequency F1 may be reduced to 40 Hz - df1.

Meanwhile, the processor 220 may determine an elapsed time from the start of operation of the shoe care apparatus 1 and stop operating the shoe care apparatus 1 when the operation time is expired (1006, 1007).

In FIG. 13, it is seen that the temperature T_in of the air flowing into the chamber 30 is maintained at the target temperature T* from a point in time ta1 when reaching the target temperature T*. As such, the shoe care apparatus 1 in an embodiment may maintain the constant temperature T_in of the air supplied into the chamber 30 to follow the target temperature T* by suitably controlling the frequency of the compressor 41.

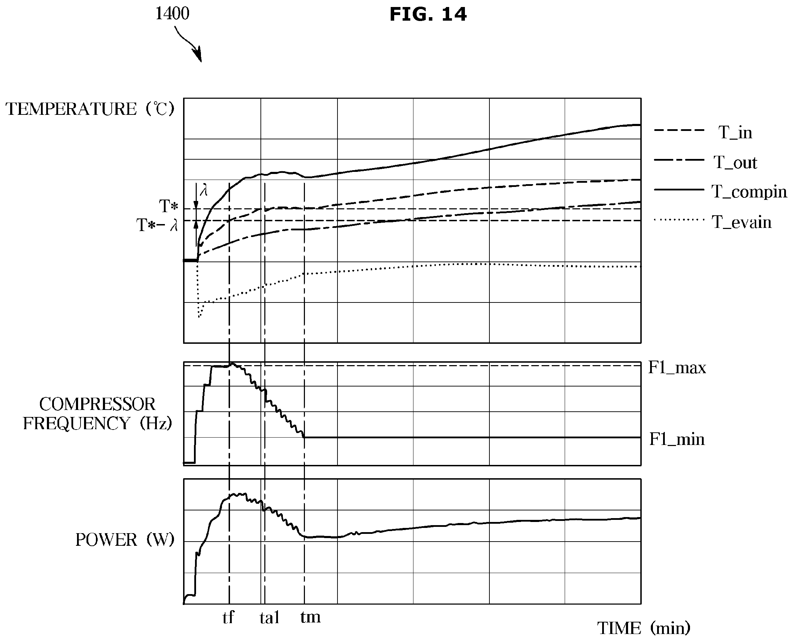

FIG. 14 is a graph 1400 illustrating limits of fuzzy control.

Referring to FIG. 14, the compressor 41 may operate within a range between a minimum frequency F1_min and a maximum frequency F1_max. However, the temperature T_in in the chamber 30 may keep rising and exceed the target temperature T*, even though the operation frequency F1 of the compressor 41 decreases after the temperature T_in reaches the target temperature T*. As shown in FIG. 14, even though the operation frequency F1 has been reduced to the minimum frequency F1_min at a point in time tm, it is seen that the temperature T_in in the chamber 30 continues to rise.

The above problem may occur when an outside air temperature is high (e.g. the outside air temperature equal to or higher than 30°C) or the target temperature is high (e.g., the target temperature equal to or higher than 43 °C). For example, when heat from the hot outside air and heat generated by the compressor 41 is transferred into the chamber 30 through the first duct 46, heat buildup inside the chamber 30 may increase. In response to the increase in heat buildup in the chamber 30, the temperature in the chamber 30 may not be maintained at the target temperature. In this case, the temperature in the chamber 30 may not be maintained at the target temperature only by controlling the frequency of the compressor 41. Thus, to complement the limit of the fuzzy control, compressor switching control may be performed.

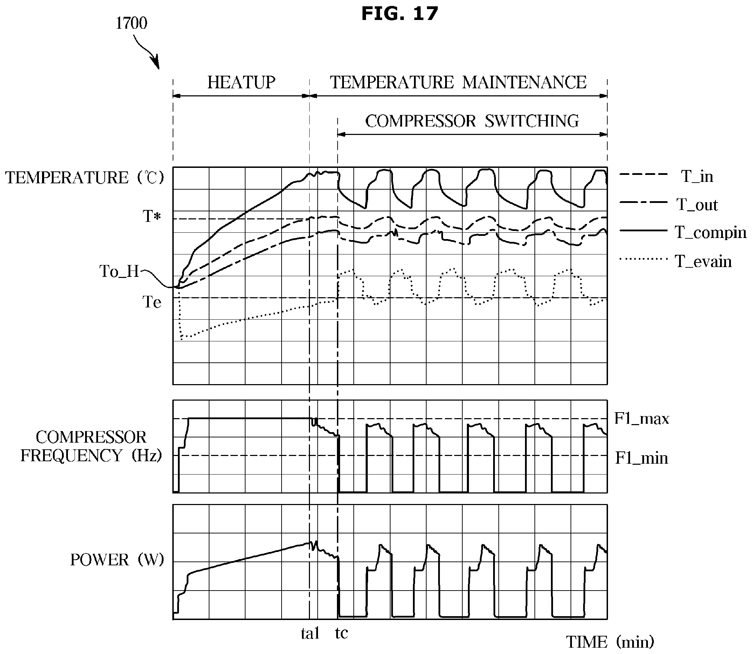

FIG. 15 is a flowchart illustrating compressor switching control in a method of controlling a shoe care apparatus according to an embodiment. FIG. 16 is a flowchart illustrating another embodiment of compressor switching control in a method of controlling a shoe care apparatus according to an embodiment. FIG. 17 is a graph 1700 illustrating a result of compressor switching control.

In FIG. 15 and FIG. 16, operation 1005 is the same as described above. That is, to maintain a temperature of air supplied into the chamber 30 at the target temperature, the processor 220 may control the operation frequency F1 of the compressor 41 based on the control value Δfa (1005).

Referring to FIG. 15, the processor 220 may check whether the first temperature T_in measured by the first temperature sensor 110 reaches a predetermined second threshold temperature T* + δ (1502). The first temperature reaching the second threshold temperature includes the first temperature being equal to or higher than the second threshold temperature. The processor 220 may stop an operation of the compressor 41, based on the temperature T_in measured by the first temperature sensor 110 reaching the second threshold temperature T* + δ and the operation frequency F1 of the compressor 41 reaching the predetermined minimum frequency F_min (1502, 1503).

In another embodiment, referring to FIG. 16, the processor 220 may check whether a temperature T_evain of refrigerant measured by the third temperature sensor 130 arranged on the inlet side of the evaporator 42 reaches a predetermined protection temperature Te (1602). The temperature T_evain of the refrigerant reaching the protection temperature Te includes the temperature T_evain of the refrigerant being equal to or higher than the protection temperature Te. The processor 220 may stop the operation of the compressor 41, based on the temperature T_evain of the refrigerant measured by the third temperature sensor 130 arranged on the inlet side of the evaporator 42 being equal to or higher than the predetermined protection temperature Te (1602, 1503).

When the temperature T_evain of the refrigerant moving to the compressor 41 from the evaporator 42 is higher than a predetermined maximum temperature value, the compressor 41 may be damaged. Accordingly, when the temperature T_evain at the inlet of the evaporator reaches the protection temperature Te, the compressor 41 is forced to be off to protect the compressor 41. The protection temperature Te may be equal to or lower than a predetermined maximum temperature of the refrigerant.

After a certain period of time elapses after the operation of the compressor 41 is stopped, the temperature T_in may be reduced below a third threshold temperature T* - α. The certain period of time may be predetermined and defined as a compressor stabilization time (e.g., 3 minutes). When the temperature T_in is reduced below the third threshold temperature T* - α, the processor 220 of the shoe care apparatus 1 may reoperate the compressor 41 (1504, 1505). That is, when the temperature of the air supplied into the chamber 30 is lower than the target temperature due to an operation stoppage of the compressor 41, control to maintain the target temperature may be performed by reoperating the compressor 41.

The processor 220 may check an elapsed time (e.g., operation time) from the start of operation of the shoe care apparatus 1 and terminate the operation of the shoe care apparatus 1 when the operation time is expired (1506, 1507).

The graph 1700 of FIG. 17 illustrates a result of compressor switching control in an environment of a high outside air temperature To_H. According to the compressor switching control, it is confirmed that the temperature T_in of the air supplied into the chamber 30 is maintained within a predetermined range of the target temperature T*. In FIG. 17, the compressor 41 operates at the maximum operation frequency F1_max to increase the temperature T_in of the air supplied into the chamber 30. At the point in time ta1, the temperature T_in of the air supplied into the chamber 30 reaches the target temperature T*, and fuzzy control starts to maintain the target temperature T*. By the fuzzy control, the operation frequency F1 of the compressor 41 is reduced from the point in time ta1. Then, based on the evaporator inlet temperature T_evain reaching the protection temperature Te at a point in time tc, the compressor switching control starts. From the point in time tc, the compressor 41 is switched on or off.

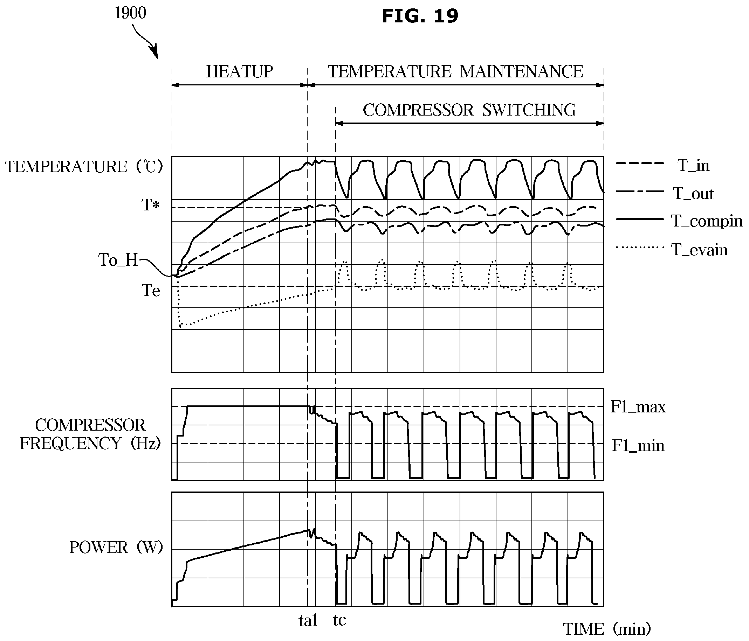

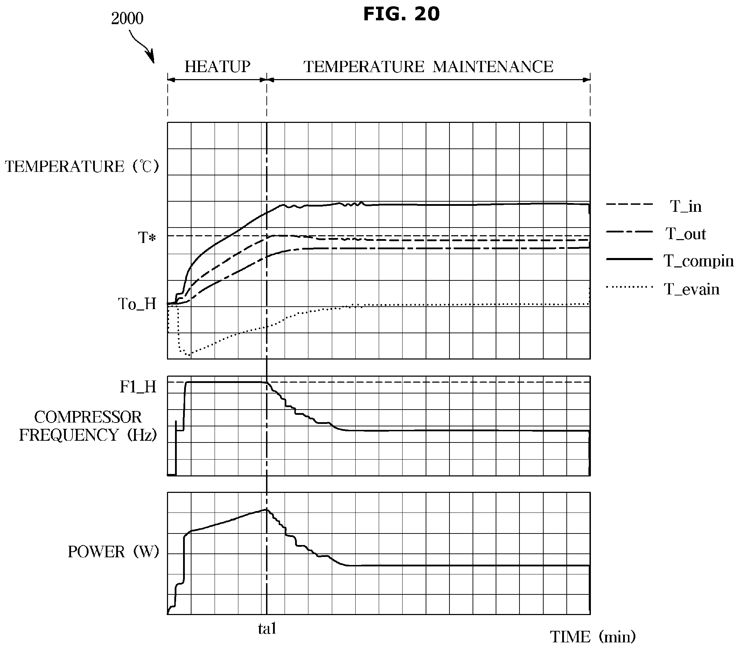

FIG. 18 is a flowchart illustrating a control method of a second fan in a method of controlling a shoe care apparatus according to an embodiment. FIG. 19 is a graph 1900 illustrating an example where an operating rate of a compressor is increased by an operation of a second fan. FIG. 20 is a graph 2000 illustrating another example where an operating rate of a compressor is increased by an operation of a second fan.

Referring to FIG. 18, the shoe care apparatus 1 starts operating (1801), and the processor 220 may determine whether an outside air temperature is equal to or higher than a predetermined first operation temperature Tsc1 (1802). The processor 220 may obtain temperature data from the second temperature sensor 120 located at the air outlet 31 of the chamber 30 in response to the start of operation of the shoe care apparatus 1. The processor 220 may determine the outside air temperature based on the temperature measured by the second temperature sensor 120.

Based on the outside air temperature being less than the predetermined first operation temperature Tsc1, the processor 220 may stop an operation of the second fan 47b or operate the second fan 47b at a predetermined rotation speed (e.g., a minimum rotation speed of 1500 RPM) (1803). Based on the outside air temperature being lower than the predetermined first operation temperature Tsc1, the temperature in the chamber 30 may be maintained at a target temperature without a decrease in an operating rate of the compressor 41. Accordingly, the operation of the second fan 47b may be unnecessary. However, the second fan 47b may be operated to detect a failure in the second fan 47b and to stabilize a temperature in the machine room 32 including the compressor 41 before a start of a dry course.

The processor 220 may determine the start of operation of the second fan 47b based on the outside air temperature being equal to or higher than the first operation temperature, and may determine whether the outside air temperature is equal to or higher than a predetermined second operation temperature (1804). The second operation temperature may be set in advance to be higher than the first operation temperature. For example, the first operation temperature may be set to 23 °C and the second operation temperature may be set to 30 °C. The processor 220 may determine a rotation speed of the second fan 47b based on whether the outside air temperature is equal to or higher than the predetermined second operation temperature.

The processor 220 may operate the second fan 47b at a first rotation speed (e.g., a base rotation speed of 2000 RPM), based on the outside air temperature exceeding the first operation temperature and being less than the second operation temperature (1805). On the contrary, the processor 220 may operate the second fan 47b at a second rotation speed (e.g., a maximum rotation speed of 2400 RPM), based on the outside air temperature being equal to or higher than the second operation temperature (1806). That is, the higher the outside air temperature, the higher the rotation speed of the second fan 47b may be set to.

As described above, compressor switching control for complementing a limit of fuzzy control may be performed to maintain the temperature in the chamber 30 at the target temperature.

The processor 220 may control the operation of the second fan 47b based on an operation state of the compressor 41. For example, the processor 220 may increase the rotation speed of the second fan 47b in response to an operation stoppage of the compressor 41 (1807, 1808). When the operation of the compressor 41 is not stopped, the rotation speed of the second fan 47b may be maintained without increasing. In addition, the processor 220 may reduce the rotation speed of the second fan 47b in response to resumption of the operation of the compressor 41 (1809, 1810).

Meanwhile, despite the outside air temperature being lower than the first operation temperature Tsc1, the temperature T_in of the air supplied into the chamber 30 may exceed the target temperature T *. For example, when a high target temperature (e.g., a temperature higher than 40 °C and less than 60 °C) is set, the target temperature may not be maintained due to heat buildup inside the chamber 30 during the dry course. Accordingly, when the outside air temperature is lower than the first operation temperature Tsc1, the compressor switching control may be performed.

When the compressor 41 stops operating according to the compressor switching control, the compressor 41 and the first duct 46 may be cooled faster by increasing the rotation speed of the second fan 47b. When the compressor 41 and the first duct 46 are cooled rapidly, the temperature of the air supplied into the chamber 30 may also decrease more rapidly. When a period of time for the temperature of the air supplied into the chamber 30 to fall below the target temperature is shortened, a period of operation stoppage of the compressor 41 may also be shortened. As the period of operation stoppage of the compressor 41 decreases, the operation time of the compressor 41 may increase. Thus, the operating rate of the compressor 41 may be increased.

Based on expiration of the operation time of the shoe care apparatus 1 (1811), the processor 220 may stop the operation of the second fan 47b and terminate the operation of the shoe care apparatus 1 (1812).

Referring to the graph 1900 of FIG. 19, an example of a result of operating the second fan 47b is shown. Comparing the graph 1900 of FIG. 19 with the graph 1700 of FIG. 17, it may be seen that the period of operation stoppage of the compressor 41 decreases and the operation time of the compressor 41 increases. That is, it may be seen that the operating rate of the compressor 41 increases by operating the second fan 47b.

Referring to the graph 2000 of FIG. 20, another example of a result of operating the second fan 47b is shown. Comparing the graph 2000 of FIG. 20 with the graph 1700 of FIG. 17, it may be seen that the period of operation stoppage of the compressor 41 does not exist. That is, the temperature T_in of the air supplied into the chamber 30 may be maintained at the target temperature T * only by the fuzzy control without the compressor switching control, due to the operation of the second fan 47b.

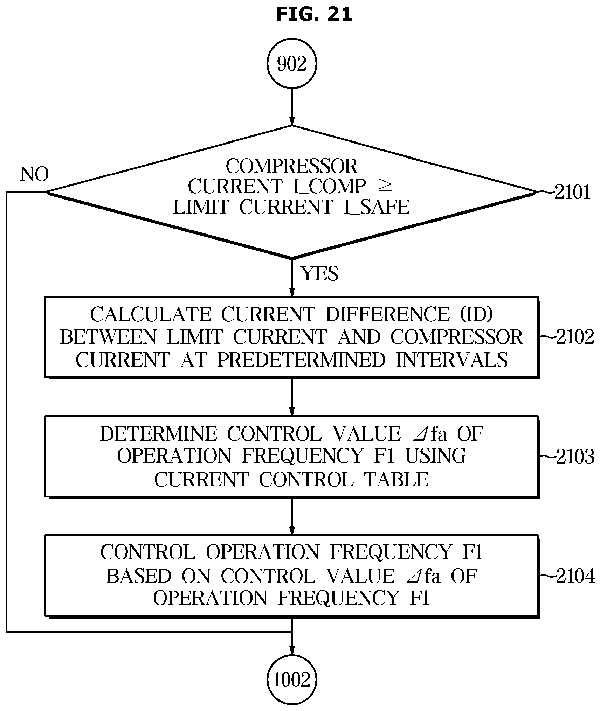

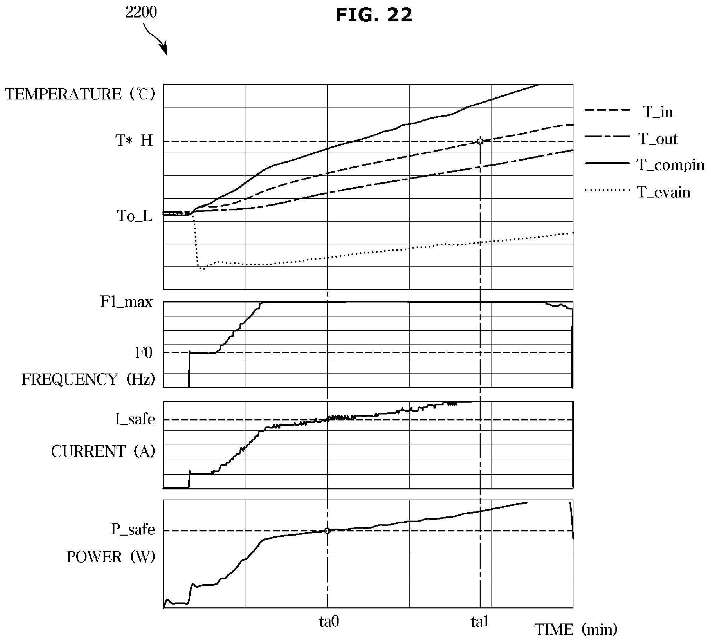

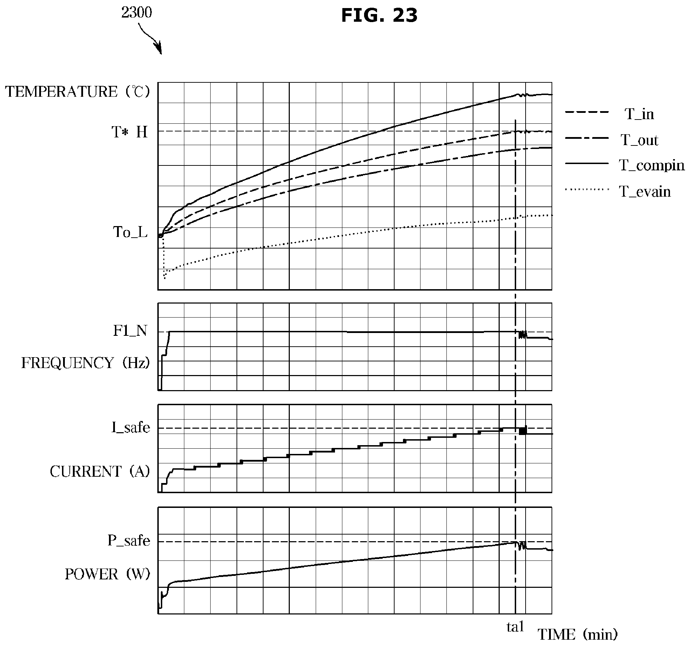

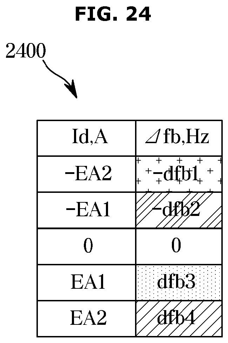

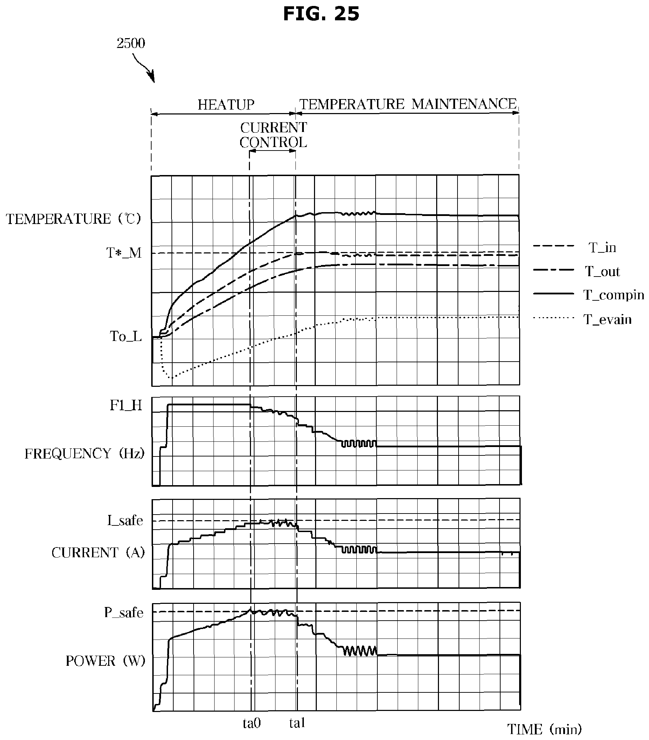

FIG. 21 is a flowchart illustrating compressor current control in a method of controlling a shoe care apparatus according to an embodiment. FIG. 22 is a graph 2200 illustrating an example of exceeding a limit current when a compressor current control is not applied during heat up. FIG. 23 is a graph 2300 illustrating an example of a long heat up time when a compressor current control is not applied during heat up. FIG. 24 illustrates a current control table 2400. FIG. 25 is a graph 2500 illustrating a result of compressor current control.

Referring to FIG. 21, operation 902 is the same as described above. The processor 220 may operate the compressor 41 at the operation frequency F1 determined based on the target temperature T* and the outside air temperature To (902). The operation of the compressor 41 may cause the temperature of the air supplied into the chamber 30 to rise (1002) (refer to FIG. 11). To reduce a heat up time, the compressor 41 may operate at the maximum frequency F1_max.

Referring to the graph 2200 of FIG. 22, when a high target temperature T*_H is set in an environment of a low outside air temperature To_L, the compressor 41 may operate at the maximum frequency F1_max to rapidly increase the temperature T_in in the chamber 30. In this case, a current applied to the compressor 41 may reach a limit current I_safe before the temperature T_in in the chamber 30 reaches the target temperature T*_H. That is, as shown in FIG. 22, a point in time ta0 at which the compressor current reaches the limit current I_safe may be earlier than the point in time ta1 at which the temperature T_in in the chamber 30 reaches the target temperature T*_H.

The limit current I_safe may be defined as a maximum current that may operate the compressor 41 without damaging the compressor 41. When the compressor current exceeds the limit current I_safe, a control circuit for controlling the compressor 41 may be damaged. Accordingly, to prevent damage to the control circuit due to application of an excessive current to the compressor 41, the processor 220 may perform a compressor current control.

Meanwhile, an increase in the compressor current has the same meaning as an increase in instantaneous power consumed by the compressor 41. That is, even when the instantaneous power of the compressor 41 exceeds limit power P_safe, the control circuit of the compressor 41 may be damaged.

Referring to the graph 2300 of FIG. 23, when the high target temperature T*_H is set in an environment of the low outside air temperature To_L, the current applied to the compressor 41 may be prevented from reaching the limit current I_safe before the temperature T_in in the chamber 30 reaches the target temperature T*_H by operating the compressor 41 at a normal frequency F1_N. However, there is a downside that it takes a longer time for the temperature T_in in the chamber 30 to reach the target temperature T*_H. Accordingly, a control method that may efficiently use the maximum frequency of the compressor without damaging the control circuit due to an excessive current is required.

Referring again to FIG. 21, the processor 220 may control the operation frequency of the compressor 41 so that the compressor current is equal to or less than a predetermined limit current. The processor 220 may control the current applied to the compressor 41 by periodically controlling the operation frequency of the compressor 41.

To this end, the processor 220 may check whether a compressor current I_comp reaches the limit current I_safe (2101). The processor 220 may calculate a current difference Id between the limit current I_safe and the compressor current I_comp at predetermined intervals (2102). The processor 220 may determine a control value Δfb of the operation frequency F1 by using a current control table 2400 that may be pre-stored (2103), and control the operation frequency based on the control value Δfb (2104). Controlling of the operation frequency F1 to be applied to the compressor 41 may be performed by adding the control value Δfb to an operation frequency F1(n-1).

The processor 220 may determine the control value Δfb corresponding to the current difference Id by referring to the current control table 2400. The control value Δfb as mentioned in the current control may be referred to as a second control value. For example, in FIG. 24, when the current difference Id is EA1, the control value Δfb may be determined as dfb3. That is, as the limit current I_safe is larger than the current compressor current I_comp by EA1, the compressor current may be increased to a larger value. When the operation frequency F1 of the compressor 41 is set to be higher than dfb3, the current applied to the compressor 41 increases.

Subsequently, when the temperature T_in reaches the first threshold temperature T* - λ (1002), the aforementioned fuzzy control may be started.

Referring to the graph 2500 of FIG. 25, when an outside air temperature is a low temperature To_L and the target temperature is set to a medium value T*_M, the operation frequency of the compressor 41 is set to a high value F1_H. Also, because the compressor current reaches the limit current I_safe at the point in time ta0 before the temperature T_in in the chamber 30 reaches the target temperature T*_H at the point in time ta1, current control of the compressor 41 is performed. When the temperature T_in of the air flowing into the chamber 30 reaches the first threshold temperature lower than the target temperature T*_M, the processor 220 of the shoe care apparatus 1 performs fuzzy control to maintain the temperature in the chamber 30.

Through the above current control, the maximum frequency of the compressor may be efficiently used without damaging the control circuit due to an excessive current. Accordingly, the heat up time of the air supplied into the chamber may be reduced.

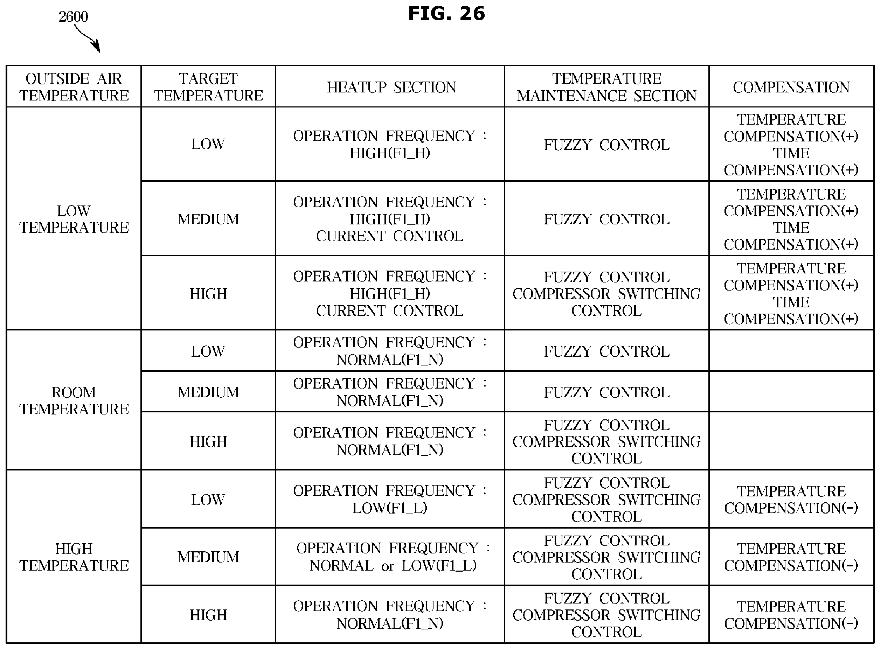

FIG. 26 is a table 2600 illustrating embodiments where the operation frequency of the compressor is controlled based on an outside air temperature and a target temperature.

Referring to the table 2600 of FIG. 26, an outside air temperature may be divided into multiple sections. For example, the outside air temperature may be divided into low temperature, room temperature and high temperature. The low temperature may be lower than 15°C, the room temperature may be 15°C or higher and 25°C or lower, and the high temperature may exceed 25°C. Alternatively, the outside air temperature may be subdivided into more sections.

The target temperature may be divided into multiple sections as well. For example, the target temperature may be divided into low target temperature, medium target temperature and high target temperature. The low target temperature may be 30°C or higher and 38°C or lower, the medium target temperature may be 38°C or higher and 43°C or lower, and the high target temperature may be 43°C or higher and 60°C or lower. Alternatively, the target temperature may be subdivided into more sections.

As the target temperature requires to be maintained regardless of changes in the outside air temperature and the target temperature, all the embodiments include fuzzy control in common for maintaining the temperature in the chamber 30 at the target temperature.

In an environment having a low outside air temperature, the operation frequency F1 of the compressor 41 may be set to a high value F1_H. The high value F1_H may refer to the maximum frequency F1_max of the compressor 41. This is to reduce the heat up time. When the outside air temperature is low and the target temperature is set to a medium value or higher, current control for controlling the operation frequency of the compressor 41 may be performed. It is because the compressor current may reach the limit current before the temperature in the chamber 30 reaches the target temperature.

In an environment in which the outside air temperature is the room temperature, the operation frequency F1 of the compressor 41 may be set to a normal value F1_N.

When the target temperature is set to have a high value, when the outside air temperature is high, or when the outside air temperature is high and the target temperature has a high value, the compressor switching control may be performed to prevent the temperature in the chamber 30 from exceeding the target temperature or to protect the compressor 41.

When a difference between the target temperature and the outside air temperature is small (e.g., when the difference between the target temperature and the outside air temperature is 10°C or less), the operation frequency of the compressor 41 may be set to a low value F1_L in order to prevent the temperature in the chamber 30 from exceeding the target temperature in the heat up section. In the table 2500, illustrated is an example where the operation frequency of the compressor 41 is set to the low value F1_L when the outside air temperature is high and the target temperature is set to a low value or a medium value.

When the outside air temperature is high and the target temperature has a high value, the operation frequency of the compressor 41 may be determined as the normal value F1_N.

Furthermore, as there may be a difference between the temperature of the shoes and the outside air temperature, compensation of the target temperature and compensation of the operation time may be performed. For example, in an environment having a low outside air temperature, compensation of the target temperature and compensation of the operation time may be performed positively. It is because the environment having the low outside air temperature requires more heat up time. On the other hand, in an environment having a high outside air temperature, compensation of the target temperature and compensation of the operation time may be performed negatively. As such, more precise temperature control may be implemented by performing compensation of the target temperature and compensation of the operation time.

As described above, the shoe care apparatus and the method of controlling the same can increase an operating rate of the compressor, even in a high outside air temperature environment. As the operating rate of the compressor increases, an actual time for dehumidification can increase, an overall operation time of the shoe care apparatus can be reduced, and a usable temperature range of the shoe care apparatus can be extended. Accordingly, a dehumidification performance of the shoe care apparatus can be improved.

Also, the shoe care apparatus and the method of controlling the same can maintain a constant air temperature in a chamber, while circulating air in the enclosed apparatus using a heat pump cycle. Accordingly, thermal damage to objects to be dried due to heat buildup in the chamber can be prevented.

The shoe care apparatus and the method of controlling the same can also reduce a heat up time of the air in the chamber by efficiently using a maximum frequency of the compressor without damaging a control circuit due to excessive current.

The shoe care apparatus and the method of controlling the same can also maintain a comfortable environment around the shoe care apparatus by not releasing contaminated air from drying and deodorizing process to the outside.

Meanwhile, the disclosed embodiments may be embodied in the form of recording medium storing instructions executable by a computer. The instructions may be stored in the form of program code and, when executed by a processor, may generate a program module to perform the operations of the disclosed embodiments.

The machine-readable storage medium may be provided in the form of a non-transitory storage medium. The term "non-transitory storage medium" may mean a tangible device without including a signal, e.g., electromagnetic waves, and may not distinguish between storing data in the storage medium semi-permanently and temporarily. For example, the non-transitory storage medium may include a buffer that temporarily stores data.

The aforementioned methods according to the various embodiments of the present invention may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. A shoe care apparatus (1), comprising:
a chamber (30) comprising an air inlet (60) and an air outlet (31);
a first duct (46) connected to the air outlet (31);
an evaporator (42) inside the first duct (46);
a condenser (43) inside the first duct (46);
a second duct (70) connecting the first duct (46) to the air inlet (60);
a holder (50) in the chamber (30) and connected to the air inlet (60);
a first fan (47a) configured to circulate air through the first duct (46), the second duct (70), the holder (50), and the chamber (30);
a compressor (41) inside a machine room (32) of the shoe care apparatus (1), the compressor (41) separated from the chamber (30) and the first duct (46) and configured to discharge a refrigerant to the condenser (43);
a second fan (47b) inside the machine room (32), and configured to allow air in the machine room (32) to flow;
a temperature sensor (120); and
a processor (220),
**characterized in that** the temperature sensor (120) is configured to measure an outside air temperature and the processor (220) is configured to control an operation of the second fan (47b) based on the outside air temperature and an operation state of the compressor (41) and the processor is configured to perform fuzzy control to control the operating frequency of the compressor (41) so that a temperature of the air heated by the condenser (43) follows a target temperature.

2. The shoe care apparatus (1) of claim 1, wherein the processor (220) is further configured to determine whether to operate the second fan (47b) based on whether the outside air temperature is equal to or higher than a predetermined first operation temperature.

3. The shoe care apparatus (1) of claim 2, wherein the processor (220) is further configured to:
start the operation of the second fan (47b), based on the outside air temperature being equal to or higher than the predetermined first operation temperature; and
set a rotation speed of the second fan (47b) based on whether the outside air temperature is equal to or higher than a predetermined second operation temperature,
wherein the predetermined second operation temperature is higher than the predetermined first operation temperature.

4. The shoe care apparatus (1) of claim 3, wherein the processor (220) is further configured to:
set the rotation speed of the second fan (47b) at a predetermined first rotation speed, based on the outside air temperature exceeding the predetermined first operation temperature and being less than the predetermined second operation temperature; and
set the rotation speed of the second fan (47b) at a second rotation speed greater than the predetermined first rotation speed, based on the outside air temperature being equal to or higher than the predetermined second operation temperature.

5. The shoe care apparatus (1) of claim 2, wherein the processor (220) is further configured to stop the operation of the second fan (47b) or operate the second fan (47b) at a predetermined minimum rotation speed, based on the outside air temperature being less than the predetermined first operation temperature.

6. The shoe care apparatus (1) of claim 2, wherein the processor (220) is further configured to increase a rotation speed of the second fan (47b) in response to an operation stoppage of the compressor (41), and decrease the rotation speed of the second fan (47b) in response to an operation resumption of the compressor (41).

7. The shoe care apparatus (1) of claim 1, wherein the second fan (47b) is located outside the first duct (46) and configured to blow the air toward the compressor (41) and the first duct (46).

8. The shoe care apparatus (1) of claim 1, further comprising:
at least one ventilation hole (11h) in an outer case (11) of the shoe care apparatus (1), the at least one ventilation hole (11h) configured to allow ventilation between an inside the machine room (32) and an outside of the shoe care apparatus (1),
wherein the second fan (47b) is configured to move the air inside the machine room (32) to the outside through the at least one ventilation hole (11h).

9. The shoe care apparatus (1) of claim 1, wherein the temperature sensor (120) is in the first duct (46), adjacent to the air outlet (31), and
the processor (220) is further configured to determine a temperature measured by the temperature sensor (120) as the outside air temperature, in response to a start of an operation of the shoe care apparatus (1).

10. A method of controlling a shoe care apparatus (1) including a first duct (46) connected to an air outlet (31) of a chamber (30), a second duct connected to an air inlet (60) of the chamber (30), a holder (50) in the chamber (30), a first fan (47a) configured to move air into the chamber (30, and a compressor (41) located inside a machine room (32) of the shoe care apparatus (1) that is separated from the first duct (46), **characterized in that** the method comprises:
determining an outside air temperature using a temperature sensor (120); and
controlling an operation of a second fan (47b) located in the machine room (32), based on the outside air temperature and an operation state of the compressor (41) performing fuzzy control to control the operating frequency of the compressor (41) so that a temperature of the air heated by the condenser (43) follows a target temperature.

11. The method of claim 10, wherein the temperature sensor (120) is in the first duct (46), adjacent to the air outlet (31), and
the determining the outside air temperature comprises determining a temperature measured by the temperature sensor (120) as the outside air temperature, in response to a start of an operation of the shoe care apparatus (1).

12. The method of claim 10, wherein the controlling the operation of the second fan (47b) comprises determining whether to operate the second fan (47b) based on whether the outside air temperature is equal to or higher than a predetermined first operation temperature.

13. The method of claim 12, wherein the controlling the operation of the second fan (47b) comprises:
starting the operation of the second fan (47b), based on the outside air temperature being equal to or higher than the predetermined first operation temperature; and
setting a rotation speed of the second fan based (47b) on whether the outside air temperature is equal to or higher than a predetermined second operation temperature,
wherein the predetermined second operation temperature is higher than the predetermined first operation temperature.

14. The method of claim 13, wherein the setting the rotation speed of the second fan (47b) comprises:
setting the rotation speed of the second fan (47b) to a predetermined first rotation speed, based on the outside air temperature exceeding the predetermined first operation temperature and being less than the predetermined second operation temperature, or
setting the rotation speed of the second fan (47b) to a second rotation speed greater than the predetermined first rotation speed, based on the outside air temperature being equal to or higher than the predetermined second operation temperature.

15. The method of claim 12, wherein the controlling the operation of the second fan (47b) further comprises stopping the operation of the second fan (47b) or operating the second fan (47b) at a predetermined minimum rotation speed, based on the outside air temperature being less than the predetermined first operation temperature.

## Patentansprüche

1. Schuhpflegevorrichtung (1), umfassend:
eine Kammer (30), die einen Lufteinlass (60) und einen Luftauslass (31) umfasst;
einen ersten Kanal (46), der mit dem Luftauslass (31) verbunden ist;
einen Verdampfer (42) innerhalb des ersten Kanals (46);
einen Kondensator (43) innerhalb des ersten Kanals (46);
einen zweiten Kanal (70), der den ersten Kanal (46) mit dem Lufteinlass (60) verbindet;
einen Halter (50) in der Kammer (30), der mit dem Lufteinlass (60) verbunden ist;
ein erstes Gebläse (47a), das so konfiguriert ist, dass es Luft durch den ersten Kanal (46), den zweiten Kanal (70), den Halter (50) und die Kammer (30) zirkulieren lässt;
einen Kompressor (41) innerhalb eines Maschinenraums (32) der Schuhpflegevorrichtung (1), wobei der Kompressor (41) von der Kammer (30) und dem ersten Kanal (46) getrennt ist und so konfiguriert ist, dass er ein Kältemittel an den Kondensator (43) abgibt;
ein zweites Gebläse (47b) innerhalb des Maschinenraums (32), das so konfiguriert ist, dass es die Luft im Maschinenraum (32) strömen lässt;
einen Temperatursensor (120); und
einen Prozessor (220),
**dadurch gekennzeichnet, dass** der Temperatursensor (120) so konfiguriert ist, dass er eine Außenlufttemperatur misst, und der Prozessor (220) so konfiguriert ist, dass er einen Betrieb des zweiten Gebläses (47b) auf der Grundlage der Außenlufttemperatur und eines Betriebszustands des Kompressors (41) steuert, und der Prozessor so konfiguriert ist, dass er eine Fuzzy-Steuerung durchführt, um die Betriebsfrequenz des Kompressors (41) so zu steuern, dass eine Temperatur der durch den Kondensator (43) erwärmten Luft einer Zieltemperatur folgt.

2. Schuhpflegevorrichtung (1) nach Anspruch 1, wobei der Prozessor (220) ferner so konfiguriert ist, dass er basierend darauf, ob die Außenlufttemperatur gleich oder höher als eine vorbestimmte erste Betriebstemperatur ist, bestimmt, ob das zweite Gebläse (47b) betrieben werden soll.

3. Schuhpflegevorrichtung (1) nach Anspruch 2, wobei der Prozessor (220) ferner konfiguriert ist, um:
den Betrieb des zweiten Gebläses (47b) basierend darauf, dass die Außenlufttemperatur gleich oder höher als die vorbestimmte erste Betriebstemperatur ist, zu starten; und
eine Drehgeschwindigkeit des zweiten Gebläses (47b) basierend darauf, ob die Außenlufttemperatur gleich oder höher als eine vorbestimmte zweite Betriebstemperatur ist, einzustellen,
wobei die vorbestimmte zweite Betriebstemperatur höher ist als die vorbestimmte erste Betriebstemperatur.

4. Schuhpflegevorrichtung (1) nach Anspruch 3, wobei der Prozessor (220) ferner konfiguriert ist zum:
Einstellen der Drehgeschwindigkeit des zweiten Gebläses (47b) auf eine vorbestimmte erste Drehgeschwindigkeit basierend darauf, dass die Außenlufttemperatur die vorbestimmte erste Betriebstemperatur übersteigt und geringer als die vorbestimmte zweite Betriebstemperatur ist; und
Einstellen der Drehgeschwindigkeit des zweiten Gebläses (47b) auf eine zweite Drehgeschwindigkeit, die größer ist als die vorbestimmte erste Drehgeschwindigkeit, basierend darauf, dass die Außenlufttemperatur gleich oder höher ist als die vorbestimmte zweite Betriebstemperatur.

5. Schuhpflegevorrichtung (1) nach Anspruch 2, wobei der Prozessor (220) ferner so konfiguriert ist, dass er basierend darauf, dass die Außenlufttemperatur niedriger als die vorbestimmte erste Betriebstemperatur ist, den Betrieb des zweiten Gebläses (47b) stoppt oder das zweite Gebläse (47b) mit einer vorbestimmten Mindestdrehgeschwindigkeit betreibt.

6. Schuhpflegevorrichtung (1) nach Anspruch 2, wobei der Prozessor (220) ferner so konfiguriert ist, dass er eine Drehgeschwindigkeit des zweiten Gebläses (47b) als Reaktion auf ein Anhalten des Betriebs des Kompressors (41) erhöht und die Drehgeschwindigkeit des zweiten Gebläses (47b) als Reaktion auf eine Wiederaufnahme des Betriebs des Kompressors (41) verringert.

7. Schuhpflegevorrichtung (1) nach Anspruch 1, wobei das zweite Gebläse (47b) außerhalb des ersten Kanals (46) angeordnet ist und so konfiguriert ist, dass es die Luft in Richtung des Kompressors (41) und des ersten Kanals (46) bläst.

8. Schuhpflegevorrichtung (1) nach Anspruch 1, ferner umfassend
mindestens ein Belüftungsloch (11h) in einem Außengehäuse (11) der Schuhpflegevorrichtung (1), wobei das mindestens eine Belüftungsloch (11h) so konfiguriert ist, dass es eine Belüftung zwischen einer Innseite des Maschinenraums (32) und einer Außenseite der Schuhpflegevorrichtung (1) ermöglicht,
wobei das zweite Gebläse (47b) so konfiguriert ist, dass es die Luft innerhalb des Maschinenraums (32) durch das mindestens eine Belüftungsloch (11h) nach außen befördert.

9. Schuhpflegevorrichtung (1) nach Anspruch 1, wobei sich der Temperatursensor (120) im ersten Kanal (46) benachbart zum Luftauslass (31) befindet, und
der Prozessor (220) ferner so konfiguriert ist, dass er in Reaktion auf einen Start eines Betriebs der Schuhpflegevorrichtung (1) eine von dem Temperatursensor (120) gemessene Temperatur als die Außenlufttemperatur bestimmt.

10. Verfahren zum Steuern einer Schuhpflegevorrichtung (1), die einen ersten Kanal (46), der mit einem Luftauslass (31) einer Kammer (30) verbunden ist, einen zweiten Kanal, der mit einem Lufteinlass (60) der Kammer (30) verbunden ist, einen (50) in der Kammer (30), ein erstes Gebläse (47a), das so konfiguriert ist, dass es Luft in die Kammer (30) bewegt, und einen Kompressor (41), der sich in einem Maschinenraum (32) der Schuhpflegevorrichtung (1) befindet, der vom ersten Kanal (46) getrennt ist, umfasst, **dadurch gekennzeichnet, dass** das Verfahren umfasst:
Bestimmen einer Außenlufttemperatur unter Verwendung eines Temperatursensors (120); und
Steuern eines Betriebs eines zweiten Gebläses (47b), das sich in dem Maschinenraum (32) befindet, basierend auf der Außenlufttemperatur und darauf, dass ein Betriebszustand des Kompressors (41), eine Fuzzy-Steuerung durchführt, um die Betriebsfrequenz des Kompressors (41) so zu steuern, dass eine Temperatur der durch den Kondensator (43) erwärmten Luft einer Zieltemperatur folgt.

11. Verfahren nach Anspruch 10, wobei sich der Temperatursensor (120) in dem ersten Kanal (46) benachbart zum Luftauslass (31) befindet, und
das Bestimmen der Außenlufttemperatur das Bestimmen einer von dem Temperatursensor (120) gemessenen Temperatur als die Außenlufttemperatur in Reaktion auf einen Start eines Betriebs der Schuhpflegevorrichtung (1) umfasst.

12. Verfahren nach Anspruch 10, wobei das Steuern des Betriebs des zweiten Gebläses (47b) das Bestimmen, basierend darauf, ob die Außenlufttemperatur gleich oder höher als eine vorbestimmte erste Betriebstemperatur ist, ob das zweite Gebläse (47b) betrieben werden soll, umfasst.

13. Verfahren nach Anspruch 12, wobei das Steuern des Betriebs des zweiten Gebläses (47b) umfasst:
Starten des Betriebs des zweiten Gebläses (47b) basierend darauf, dass die Außenlufttemperatur gleich oder höher ist als die vorbestimmte erste Betriebstemperatur; und
Einstellen einer Drehgeschwindigkeit des zweiten Gebläses (47b) basierend darauf, ob die Außenlufttemperatur gleich oder höher als eine vorbestimmte zweite Betriebstemperatur ist,
wobei die vorbestimmte zweite Betriebstemperatur höher ist als die vorbestimmte erste Betriebstemperatur.

14. Verfahren nach Anspruch 13, wobei das Einstellen der Drehgeschwindigkeit des zweiten Gebläses (47b) umfasst:
Einstellen der Drehgeschwindigkeit des zweiten Gebläses (47b) auf eine vorbestimmte erste Drehgeschwindigkeit basierend darauf, dass die Außenlufttemperatur die vorbestimmte erste Betriebstemperatur übersteigt und geringer als die vorbestimmte zweite Betriebstemperatur ist, oder
Einstellen der Drehgeschwindigkeit des zweiten Gebläses (47b) auf eine zweite Drehgeschwindigkeit, die größer ist als die vorbestimmte erste Drehgeschwindigkeit, basierend darauf, dass die Außenlufttemperatur gleich oder höher ist als die vorbestimmte zweite Betriebstemperatur.

15. Verfahren nach Anspruch 12, wobei das Steuern des Betriebs des zweiten Gebläses (47b) ferner das Anhalten des Betriebs des zweiten Gebläses (47b) oder das Betreiben des zweiten Gebläses (47b) mit einer vorbestimmten Mindestdrehzahl basierend darauf, dass die Außenlufttemperatur niedriger als die vorbestimmte erste Betriebstemperatur ist, umfasst.

## Revendications

1. Appareil d'entretien de chaussures (1), comprenant :
une chambre (30) comprenant une entrée d'air (60) et une sortie d'air (31) ;
un premier conduit (46) relié à la sortie d'air (31) ;
un évaporateur (42) à l'intérieur du premier conduit (46) ;
un condenseur (43) à l'intérieur du premier conduit (46) ;
un deuxième conduit (70) reliant le premier conduit (46) à l'entrée d'air (60) ;
un support (50) dans la chambre (30) et connecté à l'entrée d'air (60) ;
un premier ventilateur (47a) configuré pour faire circuler l'air à travers le premier conduit (46), le deuxième conduit (70), le support (50) et la chambre (30) ;
un compresseur (41) à l'intérieur d'une salle de machines (32) de l'appareil d'entretien de chaussures (1), le compresseur (41) étant séparé de la chambre (30) et du premier conduit (46) et configuré pour évacuer un réfrigérant vers le condenseur (43) ;
un deuxième ventilateur (47b) à l'intérieur de la salle de machines (32), configuré pour permettre à l'air de la salle de machines (32) de s'écouler ;
un capteur de température (120) ; et
un processeur (220),
**caractérisé en ce que** le capteur de température (120) est configuré pour mesurer la température de l'air extérieur et que le processeur (220) est configuré pour commander le fonctionnement du deuxième ventilateur (47b) sur la base de la température de l'air extérieur et d'un état de fonctionnement du compresseur (41) et que le processeur est configuré pour effectuer une commande floue afin de commander la fréquence de fonctionnement du compresseur (41) de manière à ce que la température de l'air chauffé par le condenseur (43) suive une température cible.

2. Appareil d'entretien de chaussures (1) de la revendication 1, dans lequel le processeur (220) est en outre configuré pour déterminer s'il faut faire fonctionner le deuxième ventilateur (47b) sur la base du fait que la température de l'air extérieur est égale ou supérieure à une première température de fonctionnement prédéterminée.

3. Appareil d'entretien de chaussures (1) de la revendication 2, dans lequel le processeur (220) est en outre configuré pour :
démarrer le fonctionnement du deuxième ventilateur (47b), sur la base du fait que la température de l'air extérieur est égale ou supérieure à la première température de fonctionnement prédéterminée ; et
régler la vitesse de rotation du deuxième ventilateur (47b) sur la base du fait que la température de l'air extérieur est égale ou supérieure à une deuxième température de fonctionnement prédéterminée,
la deuxième température de fonctionnement prédéterminée étant supérieure à la première température de fonctionnement prédéterminée.

4. Appareil d'entretien de chaussures (1) de la revendication 3, dans lequel le processeur (220) est en outre configuré pour :
régler la vitesse de rotation du deuxième ventilateur (47b) à une première vitesse de rotation prédéterminée, sur la base du fait que la température de l'air extérieur dépasse la première température de fonctionnement prédéterminée et est inférieure à la deuxième température de fonctionnement prédéterminée ; et
régler la vitesse de rotation du deuxième ventilateur (47b) à une deuxième vitesse de rotation supérieure à la première vitesse de rotation prédéterminée, sur la base du fait que la température de l'air extérieur est égale ou supérieure à la deuxième température de fonctionnement prédéterminée.

5. Appareil d'entretien de chaussures (1) de la revendication 2, dans lequel le processeur (220) est en outre configuré pour arrêter le fonctionnement du deuxième ventilateur (47b) ou faire fonctionner le deuxième ventilateur (47b) à une vitesse de rotation minimale prédéterminée, sur la base du fait que la température de l'air extérieur est inférieure à la première température de fonctionnement prédéterminée.

6. Appareil d'entretien de chaussures (1) de la revendication 2, dans lequel le processeur (220) est en outre configuré pour augmenter une vitesse de rotation du deuxième ventilateur (47b) en réponse à un arrêt de fonctionnement du compresseur (41), et pour diminuer la vitesse de rotation du deuxième ventilateur (47b) en réponse à une reprise de fonctionnement du compresseur (41).

7. Appareil d'entretien de chaussures (1) de la revendication 1, dans lequel le deuxième ventilateur (47b) est situé à l'extérieur du premier conduit (46) et configuré pour souffler l'air vers le compresseur (41) et le premier conduit (46).

8. Appareil d'entretien de chaussures (1) de la revendication 1, comprenant en outre :
au moins un trou de ventilation (11h) dans un boîtier extérieur (11) de l'appareil d'entretien de chaussures (1), au moins un trou de ventilation (11h) configuré pour permettre la ventilation entre l'intérieur de la salle de machines (32) et l'extérieur de l'appareil d'entretien de chaussures (1),
dans lequel le deuxième ventilateur (47b) est configuré pour déplacer l'air à l'intérieur de la salle de machines (32) vers l'extérieur à travers l'au moins un trou de ventilation (11h).

9. Appareil d'entretien de chaussures (1) de la revendication 1, dans lequel le capteur de température (120) se trouve dans le premier conduit (46), à côté de la sortie d'air (31), et
le processeur (220) est en outre configuré pour déterminer une température mesurée par le capteur de température (120) comme étant la température de l'air extérieur, en réponse à un démarrage de fonctionnement de l'appareil d'entretien de chaussures (1).

10. Procédé de commande d'un appareil d'entretien de chaussures (1) comprenant un premier conduit (46) relié à une sortie d'air (31) d'une chambre (30), un deuxième conduit relié à une entrée d'air (60) de la chambre (30), un support (50) dans la chambre (30), un premier ventilateur (47a) configuré pour déplacer l'air dans la chambre (30), et un compresseur (41) situé à l'intérieur d'une salle de machines (32) de l'appareil d'entretien de chaussures (1) qui est séparée du premier conduit (46), **caractérisée en ce que** le procédé comprend :
déterminer la température de l'air extérieur à l'aide d'un capteur de température (120) ; et
commander un fonctionnement d'un deuxième ventilateur (47b) situé dans la salle de machines (32), sur la base du fait que la température de l'air extérieur et d'un état de fonctionnement du compresseur (41) effectuant une commande floue pour commander la fréquence de fonctionnement du compresseur (41) de manière à ce que la température de l'air chauffé par le condenseur (43) suive une température cible.

11. Procédé de la revendication 10, dans lequel le capteur de température (120) se trouve dans le premier conduit (46), à côté de la sortie d'air (31), et
la détermination de la température de l'air extérieur comprend la détermination d'une température mesurée par le capteur de température (120) en tant que température de l'air extérieur, en réponse au démarrage d'un fonctionnement de l'appareil d'entretien de chaussures (1).

12. Procédé de la revendication 10, dans lequel la commande du fonctionnement du deuxième ventilateur (47b) comprend la détermination si le deuxième ventilateur (47b) doit fonctionner selon que la température de l'air extérieur est égale ou supérieure à une première température de fonctionnement prédéterminée.

13. Procédé de la revendication 12, dans lequel la commande du fonctionnement du deuxième ventilateur (47b) comprend :
démarrer le fonctionnement du deuxième ventilateur (47b), sur la base du fait que la température de l'air extérieur est égale ou supérieure à la première température de fonctionnement prédéterminée ; et
régler la vitesse de rotation du deuxième ventilateur (47b) sur la base du fait que la température de l'air extérieur est égale ou supérieure à une deuxième température de fonctionnement prédéterminée,
la deuxième température de fonctionnement prédéterminée étant supérieure à la première température de fonctionnement prédéterminée.

14. Procédé de la revendication 13, dans lequel le réglage de la vitesse de rotation du deuxième ventilateur (47b) comprend :
régler la vitesse de rotation du deuxième ventilateur (47b) à une première vitesse de rotation prédéterminée, sur la base du fait que la température de l'air extérieur dépasse la première température de fonctionnement prédéterminée et est inférieure à la deuxième température de fonctionnement prédéterminée, ou
régler la vitesse de rotation du deuxième ventilateur (47b) à une deuxième vitesse de rotation supérieure à la première vitesse de rotation prédéterminée, sur la base du fait que la température de l'air extérieur est égale ou supérieure à la deuxième température de fonctionnement prédéterminée.

15. Procédé de la revendication 12, dans lequel la commande du fonctionnement du deuxième ventilateur (47b) comprend en outre l'arrêt du fonctionnement du deuxième ventilateur (47b) ou le fonctionnement du deuxième ventilateur (47b) à une vitesse de rotation minimale prédéterminée, sur la base du fait que la température de l'air extérieur est inférieure à la première température de fonctionnement prédéterminée.
